# EUROPÄISCHE PATENTSCHRIFT

(11) **EP 3 334 596 B1**
(45) Veröffentlichungstag und Bekanntmachung des Hinweises auf die Patenterteilung: **04.03.2020**
(21) Anmeldenummer: 15775065.4
(22) Anmeldetag: 13.08.2015
(51) Int. Cl.: C23C 28/00, C23C 28/02, F16C 33/12, B32B 15/01, B32B 15/00, B22D 11/00, B22D 11/06, B22D 19/16, C22C 21/00, C22C 21/10

(54) **MEHRSCHICHTGLEITLAGERELEMENT UND DESSEN HERSTELLUNGSVERFAHREN**
MULTILAYER SLIDING BEARING ELEMENT AND ITS MANUFACTURING METHOD
ÉLÉMENT PALIER COULISSANT MULTICOUCHE ET SON PROCÉDÉ DE FABRICATION

(43) Veröffentlichungstag der Anmeldung: 20.06.2018
(73) Patentinhaber: Miba Gleitlager Austria GmbH, 4663 Laakirchen (AT)
(72) Erfinder: LANGBEIN, Falko, 4810 Gmunden (AT)
(74) Vertreter: Burger, Hannes
(86) Internationale Anmeldenummer: PCT/AT2015/050201
(87) Internationale Veröffentlichungsnummer: WO 2017/024326

(56) Entgegenhaltungen:
- WO-A1-02/40883
- DE-C1- 3 829 423

## Beschreibung

Die Erfindung betrifft ein Mehrschichtgleitlagerelement aus einem Verbundmaterial umfassend eine Stützschicht, eine mit der Stützschicht verbundene Bindeschicht und eine mit der Bindeschicht verbundene Lagermetallschicht, wobei die Bindeschicht aus Aluminium oder einer ersten, weichphasenfreien Aluminiumbasislegierung und die Lagermetallschicht aus einer zweiten, zumindest eine aus einer Gruppe bestehend aus Sn, Bi, In, Pb, sowie Mischungen daraus, ausgewählte Weichphase mit einem Anteil zwischen 3 Gew.-% und 49.9 Gew.-% enthaltenden Aluminiumbasislegierung bestehen, wobei die erste und die zweite Aluminiumbasislegierung zumindest ein Element enthalten, das ausgewählt ist aus einer Gruppe umfassend oder bestehend aus Si, Sb, Cu, Mn, Mg, Zn, Co, Zr, Ni, Sc, Er, Ti, V, Nb, Ta, wobei weiter der Anteil des zumindest einen Legierungselementes zwischen 0,5 Gew.-% und 15 Gew.-% beträgt und der Summenanteil an diesen Legierungselementen in der jeweiligen, Aluminiumbasislegierung zwischen 0,5 Gew.-% und 25 Gew.-% beträgt, und die Bindeschicht mit der Lagermetallschicht unter Ausbildung einer zwischen der Bindeschicht und der Lagermetallschicht angeordneten Bindezone über eine schmelzmetallurgische Verbindung miteinander verbunden sind, wobei in der Bindezone Körner ausgebildet sind, wobei in der Bindezone ein kontinuierlicher Korngrenzenverlauf zwischen der Bindeschicht und der Lagermetallschicht ausgebildet ist.

Weiter betrifft die Erfindung ein Verfahren zur Herstellung eines Mehrschichtgleitlagerelements umfassend die Schritte: Herstellen eines zweischichtigen Vormaterials aus der ersten Aluminiumbasislegierung, die eine erste Schicht des Vormaterials bildet, und der zweiten Aluminiumbasislegierung, die eine zweite Schicht des Vormaterials bildet, durch Verbundguss, Verbinden des zweischichtigen Vormaterials mit einem Substrat, das eine Stützschicht des Mehrschichtgleitlagers bildet, durch Walzplattieren und Fertigbearbeiten des Walzverbundmaterials zum Mehrschichtgleitlagerelement. Das Verfahren wird in Anspruch 6 definiert.

Vormaterialien für Stahl-Aluminium Verbundgleitlager werden heutzutage in erster Linie über Walzplattierverfahren hergestellt. Lagerwerkstoffe auf Basis zinnfreier Aluminiumlegierungen werden dabei direkt auf Stahl walzplattiert. Die klassischen zinnhaltigen Aluminiumlegierungen, wie z.B. AlSn6Cu oder AlSn40Cu, benötigen für die Verbindung mit dem Stahl zusätzlich eine Bindefolie, z.B. aus Reinaluminium, die zwischen dem Stahl und dem Lagermetall angeordnet wird. Der Vorverbund zwischen Lagermetall und Bindefolie wird dabei ausschließlich über Walzplattieren produziert. Plattierte Verbunde haben aber den Nachteil, dass es bei der Verbindungsbildung nur zur Ausbildung von adhäsiven Bindungen kommt.

Aus dem Stand der Technik, wie z.B. der EP 0 966 333 A1 oder der DE 103 33 589 B4, sind auch Verfahren bekannt, nach denen die Lagermetall-Legierung auf den Stahlträger aufgegossen wird. Derartige Vormaterial-Verfahren können jedoch nicht auf die Werkstoffkombination Stahl-Aluminium angewendet werden. Hintergrund dafür ist, dass Eisen in Aluminium nahezu keine Löslichkeit aufweist (bei 655°C 0,052 Gew.-% Fe, bei 600°C 0,025 Gew.-% Fe, bei 500°C 0,006 Gew.-% Fe). Bei erhöhten Temperaturen (z.B. oberhalb 400°C) kommt es zwischen Eisen und Aluminium zu einer thermodynamisch bedingten Diffusions-Reaktion und darauffolgend zur Bildung komplexer intermetallischer Phasen. Diese führen zu einer signifikanten Reduktion der Haft-festigkeit des Verbundes und sind daher unerwünscht.

Aus der EP 0 947 260 A1 ist die Verwendung von monotektischen Legierungen zur Herstellung von Gleitlagern durch Stranggießen einer auf eine Temperatur oberhalb der Entmischungstemperatur erhitzten Schmelze mit großer Gieß- und Abkühlgeschwindigkeit zur direkten Plattierung von Stahlträgern ohne Anwendung von Zwischenschichten bekannt. Nicht monotektische Legierungen (z.B. die gängigen Aluminium-Zinn Lagerlegierungen) sind ausgeschlossen und können nicht zum Direktplattieren verwendet werden, da insbesondere das Element Zinn beim Walzplattieren keine Bindung respektive keine ausreichende Haftfestigkeit mit dem Stahl ausbildet.

Aus der DE 20 14 497 A ist ein Verfahren zur Herstellung eines Gleitlagers bekannt, nach dem auf ein Stahlband in einem ersten Schritt nach dem Aludip Verfahren eine Al-Si-Legierung aufgetaucht und auf letztere in einen weiteren Schritt eine Aluminiumlegierung mit Sn und Pb aufgegossen wird.

Die GB 749,529 A beschreibt ein Verfahren zur Herstellung eines Gleitlagers bei dem zuerst ein zweischichtiges Vormaterial durch Aufgießen einer Aluminium-Zinn-Legierung auf eine Aluminiumplatte hergestellt wird, dieses Vormaterial danach gewalzt wird und nach dem Walzen über die zinnfreie Seite auf einen Stahlträger plattiert wird.

Die DE 38 29 423 C1 beschreibt ein Verfahren zur Herstellung metallischer Schichtverbundwerkstoffe, bei dem man wenigstens eine feste bahnförmige Metallkomponente (beispielsweise Aluminium mit 99,5-%-iger Reinheit) mit einer zweiten aus einer Schlitzdüse schmelzflüssig austretenden Metallkomponente (beispielsweise AlSn6CuNi1) vor dem Walzspalt eines Kühlwalzenpaares vereinigt und die vereinigten Metallkomponenten durch den Walzspalt hindurchführt, wobei man die bahnförmigen Metallkomponenten zunächst in einem Bereich der Berührung mit der aus der Schlitzdüse austretenden schmelzflüssigen zweiten Metallkomponente gegen die benachbarte Kühlwalze wärmeisoliert hält und auf diese Weise die zweite Metallkomponente wenigstens in einem Teil dieses Bereiches an der Kontaktfläche zu der bahnförmigen Metallkomponente schmelzflüssig hält, sodann aber durch Wärmebehandlung mit Hilfe der benachbarten Kühlwalze derart kühlt, dass die zweite Metallkomponente vor dem Austritt aus dem Walzspalt über ihren gesamten Querschnitt ihre Solidustemperatur unterschritten hat, und beim Hindurchführen durch den Walzspalt die Dicke der vereinigten Metallkomponenten reduziert.

Die in Zukunft zu erwartenden Leistungssteigerungen um bis zu 20 % bei neuen Motorengenerationen führen auch zu einer steigenden Lagerbelastung.

Es ist daher die Aufgabe der Erfindung ein Mehrschichtgleitlagerelement mit einer Aluminiumbasislegierung als Lagerlegierungsschicht zu schaffen, dass höheren Lagerbelastungen besser standhält.

Diese Aufgabe der Erfindung wird mit dem eingangs genannten Mehrschichtgleitlagerelement gelöst, bei dem die Bindezone eine Schichtdicke zwischen 10 µm und 200 µm aufweist.

Weiter wird die Aufgabe der Erfindung mit dem eingangs genannten Verfahren gelöst, bei dem vorgesehen ist, dass der Verbundguss zur Herstellung des Vormaterials in einer Vorrichtung durchgeführt wird, die zumindest drei verschiedene Zonen aufweist, wobei in einer ersten Zone ein erster Strang aus Aluminium oder aus einer der Aluminiumbasislegierungen aus einer ersten Aluminium(legierungs)schmelze hergestellt wird, in einer zweiten Zone der Strang aus Aluminium oder der ersten Aluminium(legierungs)schmelze soweit abgekühlt wird, dass dieser eine erstarrte erste Oberfläche aufweist, und dass in einer dritten Zone auf die erstarrte erste Oberfläche ein zweiter Strang aus Aluminium oder der anderen Aluminiumbasislegierung aus einer zweiten Aluminium(legierungs)schmelze aufgegossen wird, mit der Maßgabe, dass bei Verwendung von Aluminium der jeweils andere Strang aus der zweiten Aluminiumlegierung hergestellt wird, dass weiter der erste Strang im Bereich der ersten Oberfläche mit einer Abkühlrate abgekühlt wird, die ausgewählt ist aus einem Bereich von 1 °C/s bis 15 °C/s und dass der erste Strang im Bereich der ersten Oberfläche auf eine Temperatur abgekühlt wird, die nicht kleiner als 400 °C ist.

Durch die zwischen der Stützschicht und der Lagermetallschicht angeordnete Bindeschicht wird die Verbundfestigkeit zwischen der Bindeschicht und der Lagermetallschicht verbessert, wobei die Haftfestigkeit dadurch verbessert wird, dass aufgrund des Herstellungsverfahrens zwischen diesen beiden Schichten keine mikroskopisch sichtbare Grenzschicht ausgebildet wird, sondern der Übergang im Bereich der Korngrenzen fließend erfolgt, also von der Bindeschicht auf die Lagermetallschicht eine kontinuierlicher Korngrenzenverlauf vorhanden ist. Es werden damit Störzonen im Korngrenzenbereich zwischen diesen beiden Schichten vermieden. Die damit auch erreichte verbesserte Festigkeit des Schichtverbundes hat weiter Vorteile in Hinblick auf die Rissausbreitung. Bei plattierten Verbunden zeigt sich, dass ein Riss, der aus der Lagermetallschicht kommt, beim Auftreffen auf der Bindefolie nicht bzw. nicht immer in den Bindeschichtwerkstoff eindringt, sondern vielmehr entlang der Grenzfläche Bindeschicht/Lagermetallschicht fortschreitet, was zur Delamination führen kann. Bei dem Schichtverbund nach der Erfindung, findet der Rissfortschritt nicht entlang der Bindezone statt, sondern der Riss bewegt sich aufgrund des kontinuierlichen Korngrenzenverlaufs in die Bindeschicht weiter und es kann in Abhängigkeit der Festigkeit der Bindeschicht zu einem Rissstopp kommen. Eine Delamination kann daher wirkungsvoller verhindert werden. Das Gleitlager hat selbst bei Schädigung durch Risse noch eine gewisse Funktionsfähigkeit, da verhindert wird, dass der Lagerzapfen mit tribologisch schlecht geeigneten Werkstoffen in Kontakt kommt. Bei Verwendung höherfester Bindeschichten (höherfest in Bezug auf den Lagerwerkstoff), kann zudem die gesamte Festigkeit des Auflagenverbundes gezielt eingestellt und verändert werden. Es ist aber auch die Kombination höherfester Lagerwerkstoff mit eher weicher und zäher Bindeschicht möglich, wodurch die Dämpfungseigenschaften verbessert werden können. Es können also Eigenschaften, wie z.B. Anpassungsfähigkeiten und Dämpfungseigenschaften, an die jeweiligen Anforderungen angepasst werden. Bei Anwendungen, bei denen hohe Anpassungsfähigkeit benötigt wird, wird ein Schichtaufbau mit dicker Lagermetallschicht und eher dünner Bindeschicht verwendet. Steht eher die Festigkeit im Vordergrund ist es ist die umgekehrte Ausbildung möglich. Zudem kann der Bi-Metall Effekt (hat Auswirkungen auf das Aufspreizungsverhalten und Überstandsverhalten von Lagerschalen) durch die Bindeschicht (Festigkeiten, Schichtdicken, Dickenverhältnisse) beeinflusst werden.

Nach einer Ausführungsvariante des Mehrschichtgleitlagerelements ist vorgesehen, dass die erste Aluminiumbasislegierung der Bindeschicht und/oder die zweite Aluminiumbasislegierung der Lagermetallschicht zumindest ein Legierungselement aufweist oder aufweisen, das in der zwischen der Bindeschicht und der Lagermetallschicht ausgebildeten Bindezone einen Konzentrationsgradient aufweist. Dieses Legierungselement kann auch durch das Weichphasenelement gebildet sein, sodass also auch das Weichphasenelement zumindest teilweise mit einem Konzentrationsgradienten in radialer Richtung des Mehrschichtgleitlagerelements vorliegen kann. Durch dieses Legierungselement werden bekanntlich dem Lagermetall bestimmte Eigenschaften verliehen, wie z.B. verbesserte Schmierfähigkeit, höhere Härte durch Elemente die intermetallische Phasen bilden, wie z.B. Aluminide, etc. Aufgrund der Ausbildung des Härtegradients kann der Übergang der Eigenschaften der Bindeschicht und der Lagermetallschicht "weicher" gestaltet werden, wodurch die Bindefestigkeit zwischen Bindeschicht und Lagermetallschicht weiter verbessert werden kann.

Nach einer anderen Ausführungsvariante des Mehrschichtgleitlagerelements kann vorgesehen sein, dass die Korngröße der Körner in der zwischen der Bindeschicht und der Lagermetallschicht ausgebildeten Bindezone einen mittleren Durchmesser von maximal 100 µm aufweisen. Es kann damit durch die Vergrößerung der spezifischen Oberfläche zwischen der Bindeschicht und der Lagermetallschicht die Verbundfestigkeit verbessert werden.

In Hinblick auf die gegebenenfalls auftretende Rissausbreitung durch die Vermeidung von Kerbwirkungen ist es von Vorteil, wenn ein Anteil von mindestens 25 % der Körner, bezogen auf die Gesamtheit der Körner in der Bindezone, zumindest in der zwischen der Bindeschicht und der Lagermetallschicht ausgebildeten Bindezone einen annähernd globularen Habitus aufweisen.

Gemäß einer weiteren Ausführungsvariante des Mehrschichtgleitlagerelements kann vorgesehen werden, dass die erste Aluminiumbasislegierung der Bindeschicht mit Ausnahme des zumindest einen Weichphasenelementes die gleiche qualitative Zusammensetzung aufweist, wie die zweite Aluminiumbasislegierung der Lagerlegierungsschicht. Es sind also in beiden Schichten mit Ausnahme des Weichphasenelementes die gleichen Elemente vorhanden. Es kann damit erreicht werden, dass die Aluminiumbasislegierungen der Bindeschicht und der Lagerlegierungsschicht ein ähnliches Verfestigungsverhalten zeigen, wodurch das Walzverhalten des Vormaterials verbessert werden kann. Zudem kann damit aber auch die Wiederverwertbarkeit derartiger Verbundmaterialien verbessert werden, da durch die Artverwandtheit der beiden Aluminiumbasislegierungen eine Rückführung gegossener Verbunde in den Kreislauf zur Herstellung des Vormaterials einfacher möglich ist.

Gemäß einer Ausführungsvariante des Verfahrens kann vorgesehen sein, dass die Abkühlung des ersten Stranges in einer Kühlstrecke durchgeführt wird, die obere, der ersten Oberfläche des ersten Stranges zugeordnete, und untere, einer zweiten Oberfläche des ersten Stranges zugeordnete, Kühlkreisläufe aufweist, wobei die Anzahl der oberen Kühlkreisläufe kleiner ist, als die Anzahl der unteren Kühlkreisläufe. Es kann damit besser auf die thermischen Bedingungen im Strand Einfluss genommen werden, wodurch die Ausbildung des kontinuierlichen Korngrenzenverlaufs in der Bindezone nach dem anschließenden Aufgießen des zweiten Strangs verbessert werden kann.

Der erste Strang wird im Bereich der ersten Oberfläche mit einer über die gesamte Kühlstrecke gemittelten Abkühlrate abgekühlt, die ausgewählt ist aus einem Bereich von 1 °C/s bis 15 °C/s. Weiter wird der erste Strang im Bereich der ersten Oberfläche in der ersten Zone auf eine Temperatur abgekühlt wird, die nicht kleiner als 400 °C ist. Durch diese Maßnahmen, kann die Schichtdicke der Bindezone beeinflusst werden. Es ist damit möglich positiv auf die Haftfestigkeit der Bindeschicht an der Lagerlegierungsschicht Einfluss zu nehmen.

Vorzugsweise wird der erste Strang im Bereich von seitlichen Stirnflächen gekühlt, bevor der zweite Strang aufgegossen wird. Durch die Seitenkühlung kann erreicht werden, dass eine ebene Erstarrungsfront entsteht und die "Sumpftiefe" keine Abhängigkeit der Gießbreite aufweist. Dadurch kann erreicht werden, dass beim folgenden Aufgussprozess über die Gießbreite nahezu gleiche thermische Verhältnisse vorliegen, wodurch die Verbundfestigkeit des Vormaterials deutlich verbessert werden kann.

Der zweite Strang kann nach dem Aufgießen auf die erste Oberfläche des ersten Strangs mit einem weiteren Kühlkreislauf abgekühlt werden, wobei die Erstarrungsfront des zweiten Stranges vor diesem weiteren Kühlkreislauf ausgebildet wird. Auch mit dieser Ausführungsvariante des Verfahrens kann eine weitere Verbesserung der Verbundfestigkeit durch eine relativ lange Verweilzeit der flüssigen Schmelze des zweiten Strangs auf dem ersten Strang erreicht werden. Zudem kann damit eine vom ersten Strang in Richtung auf den zweiten Strang einseitig gerichtete Erstarrung erreicht werden, die sich ebenfalls positiv auf die Haftfestigkeit des zweiten Strangs auf dem ersten Strang auswirkt. Durch die gerichtete Erstarrung ist es möglich, dass Verunreinigungen und Fehlstellen, wie Poren oder Lunker, in Richtung der Oberfläche "wandern", also aus der Bindezone entfernt werden. Deren Vorhandensein an der Oberfläche stört nicht, da die Oberfläche in der Regel noch mechanisch bzw. spanend nachbearbeitet wird, wodurch die Verunreinigungen, etc. aus dem Mehrschichtgleitlagerelement entfernt werden. Die gerichtete Erstarrung kann dadurch erreicht werden, dass zumindest ein Großteil der mit dem zweiten Strang eingebrachten Energie über den ersten Strang abgeführt wird, sodass der zweite Strang erstarrt bevor er aktiv mit einer Kühleinrichtung gekühlt wird.

Von Vorteil in Hinblick das "wandern" der Verunreinigungen bzw. der Fehlstellen im Gussgefüge ist es, wenn die erste Aluminiumbasislegierung mit einem im Wesentlichen globularen Gefüge und die zweite Aluminiumbasislegierung mit einem im Wesentlichen dentritischen Gefüge hergestellt wird, da damit das "Rückwandern" in die entgegengesetzte Richtung besser vermieden werden kann.

Gemäß einer weiteren Ausführungsvariante des Verfahrens kann vorgesehen sein, dass für die Herstellung des ersten und des zweiten Stranges Aluminiumlegierungen verwendet werden, deren Schmelzpunkte sich um maximal 15 % unterscheiden, bezogen auf den Schmelzpunkt der höher schmelzenden Aluminiumbasislegierung oder bei Verwendung von Aluminium zur Herstellung des ersten oder des zweiten Stranges die für den anderen Strang verwendete Aluminiumbasislegierung einen Schmelzpunkt aufweist, die um maximal 15 % höher ist, als der Schmelzpunkt von Aluminium. Es kann damit durch das Aufgießen des jeweiligen Werkstoffes während des Aufgießens der erste Werkstoff auf eine Temperatur erwärmt/erhitzt werden, die aufgrund von Diffusionsvorgängen zwischen den beiden sich bildenden Schichten die Verbundbildung begünstigt.

In Hinblick auf die Prozessgeschwindigkeit sowie die thermischen Verhältnisse im Aufgussbereich hat es sich von Vorteil erwiesen, wenn ein Schichtdickenverhältnis (im Gusszustand) D zwischen 2 : 1 und 1 : 10 beträgt, wobei das Schichtdickenverhältnis das Verhältnis der Schichtdicke des Substrates zur Schichtdicke der Aufgussschicht ist.

Zum besseren Verständnis der Erfindung wird diese anhand der nachfolgenden Figuren näher erläutert.

Es zeigen jeweils in vereinfachter, schematischer Darstellung:
- Fig. 1: den Aufbau der Makrostruktur eines so genannten Zweistoffgleitlagers aus dem Stand der Technik ohne Ätzung;
- Fig. 2: den Aufbau der Mikrostruktur des Zweistoffgleitlagers aus dem Stand der Technik mit Korngrenzenätzung (Stützkörper Mikrostruktur nicht dargestellt);
- Fig. 3: ein Detail aus Mikrostruktur des Zweistofflagers nach Fig. 2 im Bereich der Grenzfläche zwischen Bindeschichtmetall und Lagermetall mit Korngrenzenätzung für Aluminium;
- Fig. 4: den Aufbau der Makrostruktur eines erfindungsgemäßen Vormaterials für ein Zweistoffgleitlager ohne Ätzung;
- Fig. 5: den Aufbau der Mikrostruktur eines erfindungsgemäßen Vormaterials für ein Zweistoffgleitlagers mit Ätzung der Korngrenzen (Stützschicht-Mikrostruktur ist nicht dargestellt);
- Fig. 6: ein Detail der Mikrostruktur des Verbundes zwischen der Bindeschicht und der Lagermetallschicht des Vormaterials nach Fig. 2 mit Ätzung der Korngrenzen für Aluminium;
- Fig. 7: ein Mehrschichtgleitlagerelement in Seitenansicht;
- Fig. 8: einen Ausschnitt aus einer Ausführungsvariante eines Schichtverbundes;
- Fig. 9: eine Vorrichtung zur Herstellung des Vormaterials für das Mehrschichtgleitlagerelement in Seitenansicht geschnitten;
- Fig. 10: die qualitative Bindefestigkeit, ermittelt mittels Verwindungstest, erfindungsgemäßer Verbunde im Vergleich zu Verbunden hergestellt im herkömmlichen Verfahren;
- Fig. 11: die Wechselbiegefestigkeit eines erfindungsgemäßen Verbundes im Vergleich zu einem Verbund hergestellt im herkömmlichen Verfahren;
- Fig. 12: die Wechselbiegefestigkeit eines erfindungsgemäßen Verbundes im Vergleich zu einem Verbund hergestellt im herkömmlichen Verfahren;
- Fig. 13: die Fresslastgrenze eines erfindungsgemäßen Verbundes im Vergleich zu einem Verbund hergestellt im herkömmlichen Verfahren.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Zum besseren Verständnis der Erfindung sei einleitend kurz der Stand der Technik in Bezug auf das Walzplattieren umrissen.

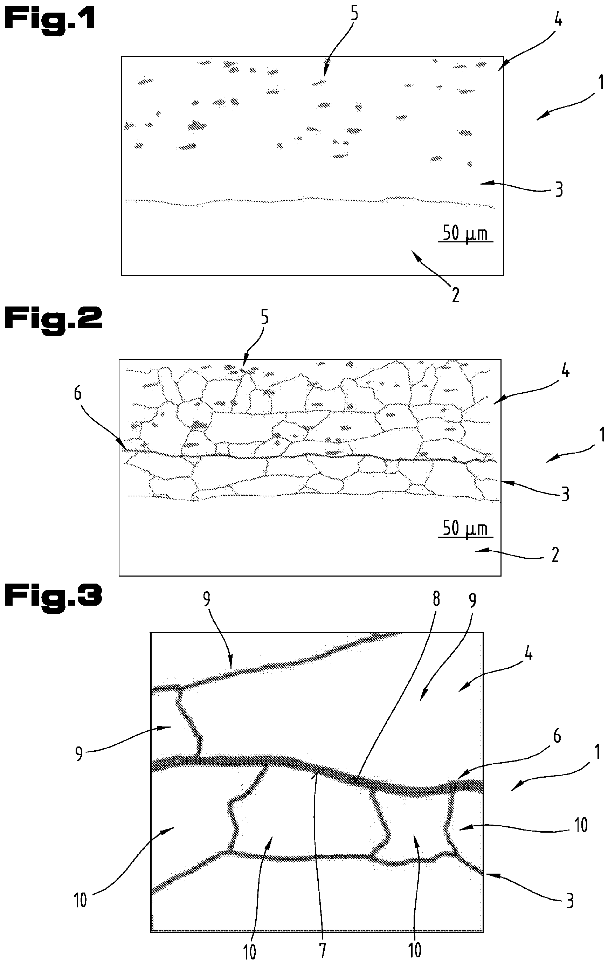

Die Fig. 1 bis 3 zeigen schematisch einen Ausschnitt (makroskopisch und mikroskopisch) aus dem Aufbau eines Stahl-Aluminium Gleitlagers 1 nach dem Stand der Technik.

Dieses Gleitlager 1 besteht aus einer Stützschicht 2 aus Stahl. Darauf aufgebracht ist eine Bindeschicht 3 aus Reinaluminium. Auf der Bindeschicht 3 ist eine Lagermetallschicht 4 aus einer Aluminiumlegierung angeordnet, die die Laufschicht des Gleitlagers 1 bildet. Die Aluminiumlegierung weist einen Zinngehalt von bis zu 50 Gew.-% auf. Der Gefügebestandteil Zinn ist eine so genannte Weichphase 5 und dient im Fall der Öl-Mangelschmierung als Schmierstoff, um die Mischreibung und im schlimmsten Fall das komplette Verreiben des Gleitlagers 1 zu verhindern. Zinn liegt als heterogener Gefügebestandteil in der Aluminiumlegierung vor.

Die Bindeschicht 3 dient ausschließlich zur Verbundbildung zwischen dem Stützschicht 2 und der Lagermetallschicht 4. Aufgrund des Anteils an Weichphasen 5 in der Lagermetallschicht 4 ist eine direkte Verbundbildung mit der Stützschicht 2 nicht möglich. Die makroskopische Struktur (Fig. 1) dieses Lageraufbaues zeichnet sich somit durch eine Kombination von drei verschiedenen Werkstoffen aus, nämlich Stahl, Reinaluminium und eine Aluminiumzinnlegierung.

Die Fig. 2 und 3 zeigen den mikrostrukturellen Aufbau des Verbundes zwischen der Bindeschicht 3 und der Lagermetallschicht 4. Der einfachen Darstellung halber wurde auf die Illustration der Mikrostruktur der Stützschicht 2 verzichtet. Gezeigt werden schematischen die Kornstrukturen beider Schichten, sowie der Weichphase 5.

Der mikrostrukturelle Aufbau der Lagermetallschicht 4 zeichnet sich durch eine ausgeprägte Grenzschicht 6 zwischen der Bindeschicht 3 und Lagermetallschicht 4 aus. Die Grenzschicht 6 wird dabei durch aneinander anliegende Oberflächen 7, 8 von Körnern 9, 10 des Aluminiums der Bindeschicht 3 und des Aluminiums der Lagermetallschicht 4 gebildet (Fig. 3). Der Kontakt eines Bindeschichtmetallkorns mit einem Lagermetallkorns stellt keine eigene Korngrenze dar, da eine Korngrenze ausschließlich Bereiche gleicher Kristallstruktur aber unterschiedlicher Orientierung trennt. Der Kontakt zwischen den beiden Werkstoffen ist vielmehr als eine synthetisch geschaffene Grenzfläche zu sehen.

Synthetisch geschaffene Grenzflächen befinden sich meist nicht im energetischen Gleichgewicht, da weder die Gitterstruktur noch die Orientierung zu einander passen und es zur Ausbildung von Inhomogenitäten in den angrenzenden Kristalliten bzw. Körnen kommt.

Bezogen auf den gesamten Verbund zwischen der Bindeschicht 3 und der Lagermetallschicht 4 bildet diese synthetisch generierte Grenzschicht 6 eine Schwachstelle, da diese im Vergleich zu einer Korngrenze, aus einer energetischen Betrachtungsweise (z.B. der Grenzflächenenergie), wesentlich ungünstiger ist. Aus der makroskopischen Betrachtungsweise heißt das, dass die Bindung bzw. die Bindefestigkeit von Verbunden mit diesen Grenzflächen ungünstig ist.

Hier setzt die Erfindung zur Verbesserung der Verbundfestigkeit an.

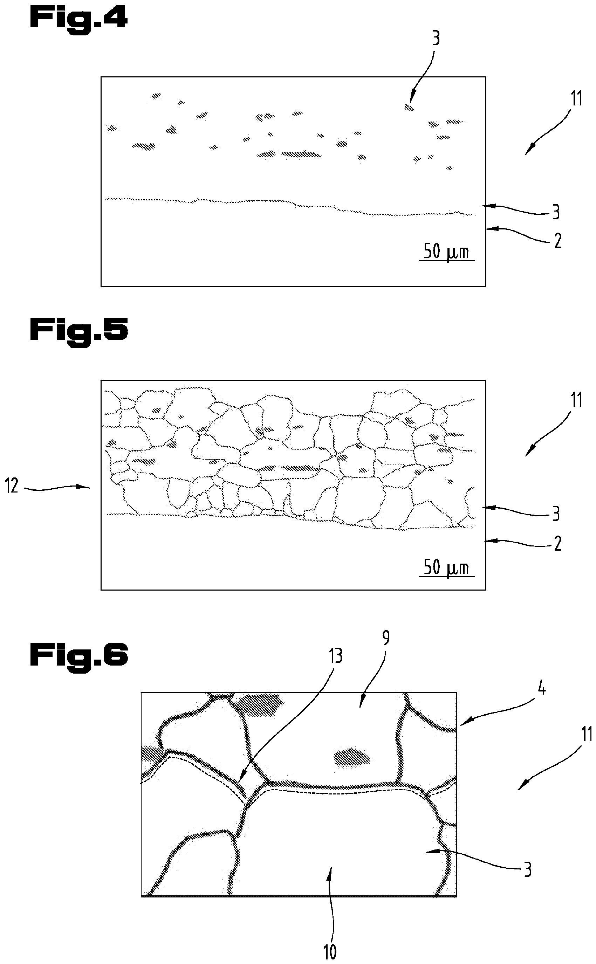

Das Mehrschichtgleitlager nach der Erfindung wird aus einem ebenen Vormaterial 11, wie es beispielsweise in den Fig. 4 bis 6 ausschnittsweise dargestellt ist, durch Umformung hergestellt.

Das Vormaterial 11 umfasst die Bindeschicht 3 und die mit der Bindeschicht 3 verbundene Lagermetallschicht 4 bzw. besteht aus diesen Schichten. Dieses Vormaterial 11 wird mit der Stützschicht 3 über die Bindeschicht 3 verbunden.

Die Bindeschicht 3 besteht aus Aluminium oder einer ersten Aluminiumbasislegierung. Die Lagermetallschicht 4 besteht aus einer zweiten Aluminiumbasislegierung. Zwischen der Bindeschicht 3 und der Lagermetallschicht 4 ist eine schmelzmetallurgische Verbindung ausgebildet.

Weiter ist zwischen der Bindeschicht 3 und der Lagermetallschicht 4 eine Bindezone bzw. ein Verbindungsbereich 12 mit einem kontinuierlichen Korngrenzenverlauf zwischen den beiden Schichten ausgebildet.

Unter einem kontinuierlichen Korngrenzenverlauf wird dabei im Sinne der Erfindung verstanden, dass zwischen zumindest den Körnern 9, 10 aus Aluminium der Lagermetallschicht 4 und der Bindeschicht 3 keine lichtmikroskopisch erkennbare Grenzschicht 6 (Fig. 2 und 3) ausgebildet ist, wie dies anhand der Fig. 4 bis 6 im Folgenden erläutert wird. Es ist also keine Unterbrechung (Diskontinuität) der Korngrenzen zwischen der Bindeschicht 3 und der Lagermetallschicht 4 vorhanden.

Zum besseren Vergleich mit dem Stand der Technik zeigen die Figuren 4 bis 6 den Aufbau (makroskopisch und mikroskopisch) des Vormaterials 11.

Der makroskopische Aufbau entspricht dem Aufbau eines Stahl-Aluminium Gleitlagers wie er zu den Fig. 1 bis 3 erläutert wurde. Die Fig. 1 und 4 zeigen daher den gleichen Aufbau.

Dementsprechend zeigt also das Vormaterial 11 makroskopisch die Bindeschicht 3 aus Reinaluminium und die Lagermetallschicht 4 aus einer Aluminiumbasislegierung. In der Aluminiumbasislegierung ist Zinn als Weichphase 5 heterogen eingelagert. Es sei dazu auf die Ausführungen zu Fig. 1 verwiesen.

Die Fig. 5 und 6 zeigen den mikrostrukturellen Aufbau des Vormaterials 11. Wie auch bei Fig. 2 wurde in Fig. 5 auf die Darstellung der Mikrostruktur der Stützschicht 2 verzichtet.

Der Unterschied zum Stand der Technik Gleitlager ist bereits aus Fig. 5 erkennbar, insbesondere jedoch aus Fig. 6 ersichtlich.

Fig. 6 zeigt im Detail den Übergang zwischen der Bindeschicht 3 und der Lagemetallschicht 4. Das Vormaterial 11 weist zwischen der Bindeschicht 3 und der Lagermetallschicht 4 keine ausgeprägte Grenzschicht auf, wie sie bei dem Gleitlager 1 nach dem Stand der Technik in den Fig. 2 und 3 dargestellt ist. Vielmehr ist innerhalb des aus der Bindeschicht 3 und der Lagermetallschicht 4 bei dieser Ausführungsvariante gebildeten Laufschichtverbundes ein kontinuierlicher Korngrenzenverlauf ausgebildet. Die Korngrenzen sind also nicht durch eine synthetische Grenzfläche, wie voranstehend beschrieben, unterbrochen. Dennoch weist das Vormaterial 11 respektive die Laufschicht aus makroskopischer Sichtweise einen Verbund zweier verschiedener Werkstoffe, nämlich aus dem Reinaluminium und der Aluminiumzinnlegierung auf, wie es in Fig. 4 schematisch dargestellt ist.

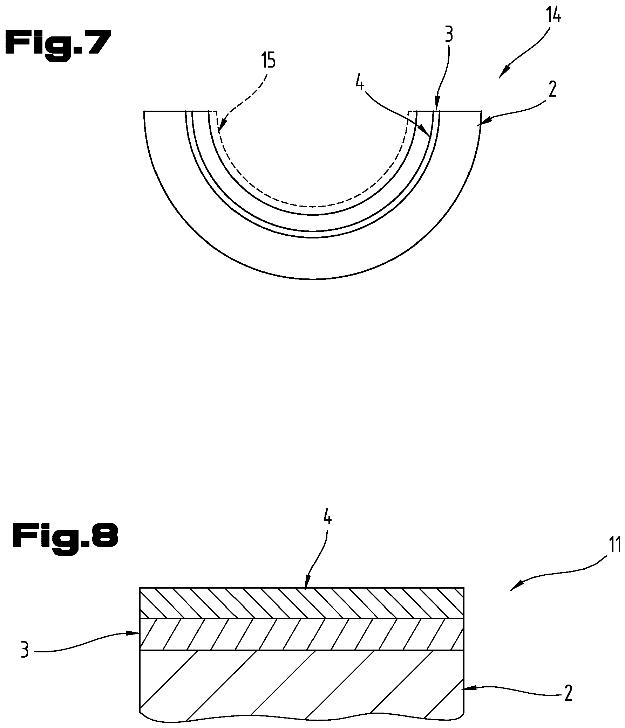

Bei dem Vormaterial 11 und in der Folge bei dem daraus gebildeten Mehrschichtgleitlager wird die Verbindung zwischen dem Bindeschichtmetall und dem Lagermetall somit ausschließlich durch den Zusammenhalt von Korngrenzen 13 zwischen den einzelnen Kristalliten bzw. Körnen 9, 10 der beiden Werkstoffe gewährleistet. Energetisch gesehen ist dies eine günstige Form der Verbindung. Aus makroskopischer Betrachtungsweise ergibt sich dadurch eine höhere mechanische Bindefestigkeit der beiden Verbundpartner, sodass ein daraus hergestelltes Mehrschichtgleitlagerelement (Fig. 7) höher belastbar ist, als vergleichbare Gleitlager 1 aus dem Stand der Technik. Wobei mit vergleichbaren Gleitlagern, der makroskopische Aufbau sowie die gleiche Werkstoffkombination, z.B. Stahl-Al99,9-AlSn20 (Stützschicht 1 - Bindeschicht 3 -Lagermetallschicht 4), gemeint ist.

Der kontinuierliche Korngrenzenverlauf kann am Produkt durch eine einfache Methode (Korngrenzenätzung) nachgewiesen werden, obwohl im makroskopischen Aufbau zwischen einem Stand der Technik und dem erfindungsgemäßen Gleitlager kein Unterschied besteht.

Der Grund für die verbesserte Bindefestigkeit liegt vor allem in den energetischen Verhältnissen.

Eine Grenzfläche (Grenzschicht 6 in Fig. 2 und 3) ist im Prinzip eine Fläche, bei der zwei "Körper" quasi abstandslos aneinander liegen, aber mit wesentlich schlechterer "Passung" als bei einem makroskopisch betrachteten homogenen "Körper". Aus energetischer Sichtweise ist eine Grenzfläche daher ein ungünstiger Zustand, da die an der Grenzfläche liegenden äußeren Bindungen in den "leeren" Raum weisen bzw. in Richtung der gegenüberliegenden, kristallografisch nicht passenden anderen Grenzfläche. Die "überflüssige" Bindungsenergie muss somit in das System gesteckt werden, was zu einem ungünstigen Energiezustand führt. Man spricht in diesem Fall von Grenzflächenenergie (J/m2).

Eine technische Oberfläche, wie sie z.B. beim Walzplattieren eingesetzt wird, weist selbst nach einer gründlichen Reinigung und Aktivierung (durch Entfettungs-, Bürst- oder Schleifprozesse) Adsorptions-, Oxid- und arteigene Randschichten auf. Diese Oberflächen werden beim Walzplattieren mittels hohen Drucks verbunden. Dabei werden die Adsorptionsschichten zerstört, die Oxid-Reaktionsschichten reißen auf und es kommt zum Kontakt der arteigenen Randschichten. Diese bilden dann die sogenannte Grenzschicht durch "mechanische Verankerung". Streng genommen kommt es nicht zu einem direkten Kontakt der Grundwerkstoffe. Bei der mechanischen Verankerung verankern sich die Metalle gegenseitig. Es bildet sich ein inniger Kontakt unter Annäherung auf atomare Abstände. Die Haftung mittels Adhäsion, kann durch hohen Druck, z.B. durch einen Umformprozess (Walzplattieren), hergestellt werden.

Durch Wärmebehandlung bei ausreichend hohen Temperaturen kommt es zwischen den Bindungspartnern (hergestellt durch eine mechanische Verankerung) zu Umordnungsprozessen in der Bindeebene, beide Werkstoffe "vermischen" sich auf atomarer Ebene. Bei dieser Grenzschicht existiert jedoch kein gleitender Übergang der Gitterstruktur beider Bindungspartner sondern es bildet sich eine Trennlinie aus.

Im metallografischen Schliffbild kann diese Grenzschicht mittels geeignetem Ätzverfahren sichtbar gemacht werden (z.B. mit Ätzlösung 5m 0,5ml HF Säure in 100ml H2O, mit Ätzdauer von 5s bis 60s). Die Anätzung der Grenzschicht erfolgt mit dem Hintergrund, dass die inneren arteigenen Randschichten lokal geänderte chemische Zusammensetzungen und Inhomogenität im angrenzenden Gitter aufweisen und daher von der Ätzlösung, im Gegensatz zum Grundwerkstoff, angegriffen werden. Das gleiche Prinzip gilt bei der Anätzung von Korngrenzen.

Der Verbund der Schichten bei dem Vormaterial 11 nach der Erfindung hat eine Reihe an Vorteilen gegenüber der mechanisch verankerten Grenzschicht, wie dies teilweise voranstehend bereits dargelegt wurde.

Die Haftung wird in diesem mittels des Zusammenhalts von Korngrenzen gewährleistet.

Wie bereits ausgeführt trennt laut Definition eine Korngrenze im Kristall Bereiche (Kristallite od. Körner) mit unterschiedlicher Ausrichtung aber mit gleicher Kristall- bzw. Gitterstruktur.

Bei der mechanisch verankerten Grenzfläche passt das Gitter (auch wenn es sich um den gleichen Gittertyp, z.B. kubisch, handelt) nicht mehr richtig zusammen. Bei dieser Verbindung kommt es immer zur Ausbildung von sehr komplexen Strukturen mit so genannten MisFit-Versetzungen, die energetisch ungünstig sind.

In Fig. 7 ist der Vollständigkeit halber ein Mehrschichtgleitlagerelement 14 aus einem Verbundmaterial in Form einer Gleitlagerhalbschale gezeigt. Gezeigt ist eine dreischichtige Ausführungsvariante bestehend aus der Stützschicht 2, der damit verbundenen Bindeschicht 3 und der mit letzterer verbundenen Lagermetallschicht 4. Das Mehrschichtgleitlagerelement 14 kann aber auch als Drittelschale, oder als Viertelschale, etc., ausgebildet sein. Die Mehrschichtgleitlagerschale können mit weiteren (gleichen oder unterschiedlichen) Lagerschalen in einer Lageraufnahme zu einem Gleitlager kombiniert werden.

Es sind aber auch andere Ausführungsvarianten des Mehrschichtgleitlagerelements 14 möglich, beispielsweise eine Ausführung als Lagerbuchse oder Anlaufring.

Die Stützschicht 2 besteht üblicherweise aus einem harten Werkstoff. Als Werkstoffe für die Stützschicht 2, auch Stützschale genannt, können Bronzen, Messing, etc. verwendet werden. In der bevorzugten Ausführungsvariante besteht die Stützschicht 2 aus einem Stahl.

Die Lagermetallschicht 4 ist bei der Ausführungsvariante nach Fig. 7 im Betrieb in direktem Kontakt mit dem zu lagernden Bauteil, beispielsweise einer Welle.

Es ist auch möglich, das Mehrschichtgleitlager 14 aus mehr als drei Schichten aufzubauen, wozu auf der die Lagermetallschicht 4 noch zumindest eine weitere Schicht angeordnet und mit dieser verbunden sein kann, beispielsweise eine Gleitschicht 15, wie dies in Fig. 7 strichliert angedeutet ist. Zwischen der Lagermetallschicht 4 und der Gleitschicht 15 kann zumindest eine Zwischenschicht angeordnet sein, beispielsweise eine Diffusionssperrschicht und/oder eine weitere Bindeschicht. Diese Schichten können galvanische oder mittels PVD- oder CVD-Verfahren abgeschiedene Schichten sein. Ebenso kann eine Polymer basierende Schicht, insbesondere ein Gleitlack, aufgebracht sein. Es sind auch Kombinationen daraus möglich.

Die Fig. 8 zeigt einen Querschnitt einer Ausführungsvariante eines Schichtverbundes des Vormaterials 11 umfassend die bzw. bestehend aus der Stützschicht 2, die/der darauf angeordnete(n) und mit dieser verbundene(n) Bindeschicht 3 sowie die/der auf letzterer und mit dieser verbundene(n) Lagermetallschicht 4. Die Lagermetallschicht 4 kann sich über die gesamte Oberfläche der Bindeschicht 3 erstrecken. Es ist aber auch möglich, dass sich die Lagermetallschicht 4 nur über einen Teilbereich dieser Oberfläche der Bindeschicht 3 erstreckt.

Die Bindeschicht 3 und die Lagermetallschicht 4 weisen als Hauptbestandteil Aluminium auf, das jeweils die Matrix der Schichten bildet.

Beispielsweis kann die Bindeschicht 3 aus Reinaluminium (Al99 oder Al99,9) bestehen. Die erste Aluminiumbasislegierung der Bindeschicht 3 und/oder die zweite Aluminiumbasislegierung der Lagermetallschicht 4 enthalten zumindest ein Element, das ausgewählt ist aus einer Gruppe umfassend oder bestehend aus Si, Sb, Cu, Mn, Mg, Zn, Co, Zr, Ni, Sc, Er, Ti, V, Nb, Ta. Der Anteil des zumindest einen Legierungselementes beträgt zwischen 0,5 Gew.-% und 15 Gew.-%, wobei der Summenanteil an diesen Legierungselementen in der Aluminiumbasislegierung zwischen 0,5 Gew.-% und 25 Gew.-% beträgt. Si und Sb agieren dabei als Hartphasenelemente bzw. Hartphasenbildner, die Elemente Cu, Mn, Mg, Zn dienen als Hauptverfestigungselemente und die Elemente Co, Zr, Ni, Sc, Er, Ti, V, Nb, Ta dienen als Nebenverfestigungselemente. Es kann also auch zumindest ein Element aus jeder der drei zuletzt genannten Elementegruppen in der Bindeschicht 3 und/oder der Lagermetallschicht 4 enthalten sein.

Für den Fall, dass auf der Lagermetallschicht 4 eine Deckschicht angeordnet wird, kann diese aus den Werkstoffen für die Bindeschicht 3 hergestellt werden. In diesem Fall kann das Vormaterial also zwei oder drei verschiedene Aluminiumwerkstoffe umfassen.

Anders als die Bindeschicht 3 enthält die Aluminiumbasislegierung der Lagermetallschicht 4 zumindest ein Weichphasenelement, das ausgewählt ist aus einer Gruppe umfassen Sn, Bi, In, Pb, sowie Mischungen daraus. Der Anteil des Weichphasenelementes bzw. der Summenanteil kann maximal 49,9 Gew.-%, insbesondere zwischen 3 Gew.-% und 40 Gew.-%, betragen. Das Weichphasenelement ist insbesondere nicht mischbar mit dem Matrixelement und bildet einen heterogenen Gefügebestandteil der Legierung. Vorzugsweise ist Sn und/oder Bi als Weichphasenelement enthalten.

Die Bindeschicht 3 ist weichphasenfrei.

Prinzipiell können sich die erste und die zweite Aluminiumbasislegierung sowohl qualitativ als auch quantitativ unterscheiden. Bevorzugt wird jedoch eine Ausführungsvariante des Vormaterials 11 und damit des Mehrschichtgleitlagerelements 14, bei der die erste Aluminiumbasislegierung der Bindeschicht 3 mit Ausnahme des zumindest einen Weichphasenelementes die gleiche qualitative Zusammensetzung aufweist, wie die zweite Aluminiumbasislegierung der Lagerlegierungsschicht 4. Es ist dabei auch möglich, dass sich die beiden Aluminiumbasislegierungen nur durch das zumindest eine Weichphasenelement unterscheiden, d.h. dass auch die Anteile der weiteren Legierungselemente in den beiden Aluminiumbasislegierungen gleich sind. Beispielsweise kann die erste Aluminiumbasislegierung der Bindeschicht 3 aus AlCuMn und die zweite Aluminiumbasislegierung der Lagermetallschicht 4 aus AlSn20CuMn bestehen. Durch die qualitative und gegebenenfalls quantitative Ähnlichkeit der ersten und der zweiten Aluminiumlegierung weisen diese ein sehr ähnliches Verfestigungsverhalten auf, wodurch der Kaltwalzbarkeit deutlich verbessert werden kann.

Nach einer weiteren Ausführungsvariante des Mehrschichtgleitlagerelements 14 kann vorgesehen sein, dass das neben Aluminium zumindest eine Legierungselement der ersten Aluminiumbasislegierung der Bindeschicht 3 und/oder der zweiten Aluminiumbasislegierung der Lagermetallschicht 4 in dem zwischen der Bindeschicht 3 und der Lagermetallschicht 4 ausgebildeten Bindezone einen Konzentrationsgradient aufweist, sodass also kein sprunghafter Übergang in der Konzentration des zumindest einen Legierungselementes in dem aus der Bindeschicht 3 und der Lagermetallschicht 4 gebildeten Verbund aufweist. Bei mehreren vorhandenen Legierungselementen kann der Konzentrationsgradient für zumindest eines bzw. für mehrere dieser Legierungselemente oder für alle Legierungselemente ausgebildet sein. Beispielsweise kann der Konzentrationsgradient nur für das zumindest eine Weichphasenelement ausgebildet sein.

Im Sinne der Erfindung wird unter der Bindezone, synonym auch als Verbindungsbereich 12 bezeichnet, eine Schichtdicke an der makroskopisch wahrnehmbaren Grenzfläche zwischen der Bindeschicht 3 und der Lagermetallschicht 4 von maximal 200 µm, insbesondere zwischen 10 µm und 100 µm, verstanden.

Die Schichtdicke der Bindeschicht 3 kann im Mehrschichtgleitlagerelement 14 zwischen 100 µm und 1000 µm betragen. Im Gusszustand, also nach der Herstellung des Verbundgusses und vor dessen Weiterverarbeitung, kann die Schichtdicke der Bindeschicht 3 zwischen 2 mm und 12 mm betragen.

Die Schichtdicke der Lagermetallschicht 4 kann zwischen 100 µm und 3000 µm betragen. Im Gusszustand, kann die Schichtdicke der Lagermetallschicht 4 zwischen 8 mm und 20 mm betragen.

Es kann weiter vorgesehen werden, dass die Korngröße der Körner 10 der Bindeschicht 3 und/oder die Körner 9 der Lagermetallschicht 4 in dem zwischen der Bindeschicht 3 und der Lagermetallschicht 4 ausgebildeten Verbindungsbereich 12 einen mittleren maximalen Durchmesser von maximal 100 µm aufweisen. Erreicht wird dies durch schmelzmetallurgische Zugaben von Kornfeinungsmitteln in Kombination mit geeigneten thermo-mechanischen Prozessführungen, wie sie heute Stand der Technik sind.

Unter mittlerer Durchmesser wird dabei die mittlere lineare Korngröße verstanden, die auch als Heynsche Korngröße bekannt ist. Die Messung von diesem Gefügekennwert erfolgt durch optische Auswertung von Schliffbildern anhand der Richtlinien der quantitativen Gefügeanalyse, die heutzutage Stand der Technik ist.

Von Vorteil ist es dabei, wenn ein Anteil von mindestens 25 % der Körner 9, 10, bezogen auf die Gesamtheit der Körner 9, 10 in dem Verbindungsbereich 12, zumindest in der zwischen dem Bindeschicht 3 und der Lagermetallschicht 4 ausgebildeten Verbindungsbereich 12 einen annähernd globularen Habitus aufweisen.

Das Vormaterial 11 wird durch einen Verbundguss hergestellt, sodass die Bindeschicht 3 schmelzmetallurgisch mit der Lagermetallschicht 4 verbunden wird. Dazu kann der aufgeschmolzene Werkstoff für die Lagermetallschicht 4 auf die feste Bindeschicht 3 aufgegossen werden. Es ist aber auch möglich, dass umgekehrt der aufgeschmolzene Werkstoff für die Bindeschicht 3 auf die feste Lagermetallschicht 4 aufgegossen wird.

Zudem ist es alternativ dazu möglich, dass die Bindeschicht 3 oder die Lagermetallschicht 4 zumindest im Bereich ihrer Oberfläche aufgeschmolzen wird und der Werkstoff für die Lagermetallschicht 4 oder die Bindeschicht 3 auf den zumindest teilweise aufgeschmolzenen Werkstoff der Bindeschicht 3 oder der Lagermetallschicht 4 aufgegossen wird.

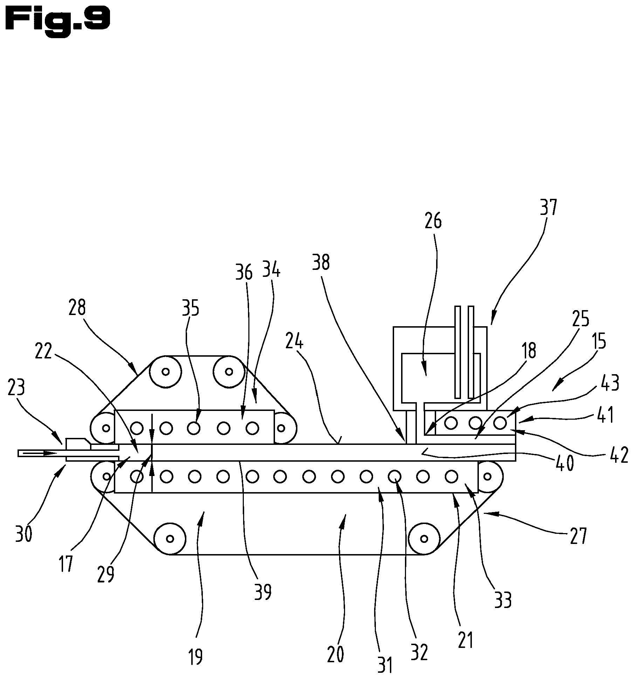

In Fig. 9 ist die bevorzugte Ausführungsvariante einer Vorrichtung 16 zur Herstellung des Verbundgusses aus der Bindeschicht 3 und der Lagermetallschicht 4 dargestellt. Da die Abfolge des Gusses unterschiedlich sein kann, wie dies soeben dargelegt wurde, wird im Folgenden lediglich ein Substrat 17 und eine Aufgussschicht 18 angesprochen. Das Substrat 17 kann die Bindeschicht 3 oder die Lagermetallschicht 4 und die Aufgussschicht 18 dementsprechend die Lagermetallschicht 4 oder die Bindeschicht 3 sein. Davon abhängig sind auch die erste und die zweite Aluminiumbasislegierung zu wählen.

Generell umfasst die Herstellung des Mehrschichtgleitlagerelementes 14 die folgenden Verfahrensschritte: umfassend die Schritte:
- Herstellen des zweischichtigen Vormaterials 11 aus einer ersten Aluminiumbasislegierung, die eine erste Schicht des Vormaterials 11 bildet, und einer zweiten Aluminiumbasislegierung, die eine zweite Schicht des Vormaterials 11 bildet, durch Verbundguss;
- Verbinden des zweischichtigen Vormaterials 11 mit einem Substrat, das die Stützschicht 2 des Mehrschichtgleitlagerelementes 14 bildet, durch Walzplattieren;
- Fertigbearbeiten des Walzverbundmaterials zum Mehrschichtgleitlagerelement 14,

Die Vorrichtung 16 zur Herstellung des Verbundgusses weist zumindest eine erste Zone 19, eine an diese unmittelbar anschließende zweite Zone 20 und eine an diese unmittelbar anschließende dritte Zone 21 auf. In der ersten Zone 19 wird ein erster Strang 22 aus Aluminium oder aus einer der Aluminiumbasislegierungen aus einer ersten Aluminium(legierungs)schmelze 23 hergestellt. In der zweiten Zone 20 wird der erste Strang 22 aus der ersten Aluminium(legierungs)schmelze 23 zumindest soweit abgekühlt wird, dass dieser eine erstarrte erste Oberfläche 24 aufweist. In der dritten Zone 21 wird auf die erstarrte erste Oberfläche 24 ein zweiter Strang 25 aus Aluminium oder der anderen Aluminiumbasislegierung aus einer zweiten Aluminium(legierungs)schmelze 26 aufgegossen wird, mit der Maßgabe, dass bei Verwendung von Aluminium der jeweils andere Strang 22 oder 25 aus der zweiten Aluminiumbasislegierungen hergestellt wird.

Die Vorrichtung 16 weist ein erstes, unteres endloses Band 27 und eine zweites, oberes Band 28 auf, die jeweils über mehrere Rollen geführt sind. Das erste, untere Band 27 erstreckt sich über die gesamte Länge der Vorrichtung 16 in Produktionsrichtung. Das zweite, obere Band 28 erstreckt sich hingegen nur über einen Teilbereich dieser gesamten Länge, wie dies aus Fig. 9 ersichtlich ist. Dieser Teilbereich definiert die erste Zone 19 der Vorrichtung.

Ein vertikaler Abstand 29 definiert die Gießkavität für das Substrat 17, d.h. die Substratschichtdicke, die je nach verwendetem Substratwerkstoff zwischen 2 mm, insbesondere 6 mm, und 20 mm betragen kann. Die Breite der Gießkavität (in Richtung der Draufsicht auf Fig. 9) kann beispielsweise bis zu 450 mm betragen.

Die erste Aluminium(legierungs)schmelze 23 wird über eine horizontal angeordnet Gießdüse 30 am Beginn der Vorrichtung 16 auf das erste, untere Band 27 aufgebracht. Dazu erstreckt sich diese Gießdüse 30 bis zwischen das erste untere Band 27 und das zweite obere Band 28.

Unterhalb des ersten, unteren Bands 27 ist eine erste Kühleinrichtung 31 mit zumindest einem, von einem Kühlmittel durchströmten ersten Kühlkanal 32 angeordnet, wobei bevorzugt das erste, untere Band 27 an dieser ersten Kühleinrichtung 31 anliegt. Die erste Kühleinrichtung 31 kann eine Kühlplatte 33, z.B. aus Kupfer, umfassen, in der der zumindest eine erste Kühlkanal 32 angeordnet ist.

Weiter ist oberhalb des zweiten oberen Bands 28 eine zweite Kühleinrichtung 34 mit zumindest einem, von einem Kühlmittel durchströmten zweiten Kühlkanal 35 angeordnet, wobei bevorzugt das zweite, obere Band 28 an dieser zweiten Kühleinrichtung 34 anliegt. Die zweite Kühleinrichtung 34 kann eine Kühlplatte 36, z.B. aus Kupfer, umfassen, in der der zumindest eine zweite Kühlkanal 35 angeordnet ist.

Die erste Kühleinrichtung 31 erstreckt sich über beinahe die gesamte Länge der Vorrichtung 16 in Produktionsrichtung. Die zweite Kühleinrichtung 34 erstreckt sich hingegen nur über zumindest annähernd die gesamte Länge des ersten Zone 20. Dadurch wird der erste Strang 22 in der an die erste Zone 19 anschließenden Zone 20 nicht zwangsgekühlt. Es können damit die thermischen Bedingungen an der ersten, oberen Oberfläche 24 des Substrats 17 für das nachfolgende Aufgießen des zweiten Stranges 25 verbessert werden.

Bevorzugt sind die Kühlplatten 33, 36 zumindest annähernd parallel zueinander angeordnet.

Über die erste und die zweite Kühleinrichtung 31, 34 wird der Schmelze des ersten Strangs 25 Schmelzwärme entzogen. Die Kühlung erfolgt dabei mit einer Abkühlrate im Bereich der ersten Oberfläche 24 des ersten Strangs 22, die ausgewählt ist aus einem Bereich von 1 °C/s bis 15 °C/s. Dabei wird die Abkühlrate bevorzugt auf die Bandgeschwindigkeit(en) angepasst. Der erste Strang 22 wird im Bereich der ersten Oberfläche 24 auf eine Temperatur in der ersten Zone 19 abgekühlt, die nicht kleiner als 400 °C ist, insbesondere zwischen 400 °C und 550 °C beträgt.

Zumindest das erste, untere Band 27 ist angetrieben, sodass also die aufgegossene Schmelze in Produktionsrichtung (in Fig. 9 von links nach rechts) gefördert wird. Es kann aber zusätzlich auch das zweite, obere Band 28 angetrieben sein, wobei in diesem Fall die beiden Bandgeschwindigkeiten miteinander synchronisiert werden, beispielsweise mit einem Servomotor.

Über die Bandgeschwindigkeit(en) kann die Gießgeschwindigkeit eingestellt bzw. variiert werden.

Am Ende der Vorrichtung 16 befindet sich eine Aufgusseinheit 37, mit der die Aluminium(legierungs)schmelze für den zweiten Strang 25 auf die Oberfläche 24 des ersten Strangs 22 aufgegossen wird.

Der horizontale Abstand zwischen dem Beginn dieser Aufgusseinheit 37 und dem Ende des zweiten, oberen Bandes 28 (jeweils in Produktionsrichtung betrachtet), definiert die Länge der zweiten Zone 20 der Vorrichtung 16. Demgemäß ist die dritte Zone der Vorrichtung 16 durch die Länge des Beginns der Aufgusseinheit 37 und dem Ende des ersten, unteren Bandes 27 definiert.

Die Aufgusseinheit 37 ist in Produktionsrichtung verstellbar ausgebildet, sodass also die Längen der zweiten und dritten Zonen 20, 21 variiert werden können. Es kann damit auf die Verbundfestigkeit zwischen der Aufgussschicht 18 und dem Substrat 17 Einfluss genommen werden, insbesondere auch wenn Vormaterialien 11 aus unterschiedlichsten Legierungszusammensetzungen hergestellt werden, da damit Einfluss auf die thermischen Bedingungen an der ersten Oberfläche 24 des ersten Strangs 22 genommen werden kann.

Die Aufgusseinheit 37 weist bevorzugt eine vertikal angeordnete Gießdüse 38 auf. Es ist weiter bevorzugt, wenn die Gießdüse 38 in Gießrichtung verstellbar ausgebildet ist. Die Ausgussdicke der Gießdüse 38 kann beispielsweise 4 mm bis 12 mm betragen. Bevorzugt ist die Aufgussdicke gleich der Gießspaltdicke der Gießdüse 38. Der Gießspalt der Gießdüse 38 kann gerade oder konisch zusammenlaufend ausgebildet sein. Bevorzugt ist die Gießbreite der Gießdüse gleich der Breite der Gießkavität für das Substrat 17.

Mittels der Aufgusseinheit 37 wird die Aufgussschicht 18 auf das Substrat 17 aufgegossen. Das Substrat 17 ist dabei vor der Aufgusseinrichtung 37 zumindest im Bereich der Oberfläche 24, bevorzugt vollständig, bereits fest, d.h. erstarrt.

Gemäß einer weiteren bevorzugten Ausführungsvariante des Verfahrens kann vorgesehen sein, dass die Abkühlung des ersten Stranges 22 in einer Kühlstrecke durchgeführt wird, die obere, der ersten Oberfläche 24 des ersten Stranges 22 zugeordnete, und untere, einer zweiten Oberfläche 39 des ersten Stranges 22 zugeordnete Kühlkreisläufe aufweist, wobei die Anzahl der oberen Kühlkreisläufe kleiner ist, als die Anzahl der unteren Kühlkreisläufe. Dazu kann der zumindest der zumindest eine Kühlkanal 32 der untere Kühleinrichtung 31 in mehrere, insbesondere drei, voneinander unabhängige Kühlkreisläufe aufgeteilt werden. Die obere Kühlreinrichtung 34 kann weiterhin mit nur einem einzigen Kühlkanal 35 ausgebildet sein.

Es sei darauf hingewiesen, dass die Kühlplatten 33, 36 mehrere Teilkanäle, die in Produktionsrichtung hintereinander und insbesondere quer zur Produktionsrichtung verlaufen, wie dies in Fig. 9 dargestellt ist, aufweisen können. Diese Teilkanäle können aber einem einzigen Kühlkanal bilden, indem diese Teilkanäle beispielsweise mäanderförmig verlaufend ausgebildet sind. Ebenso können an den Längsseiten der Vorrichtung 16 zwei Sammelkanäle angeordnet sein, wobei die Teilkanäle von einem der Sammelkanäle ausgehen und in den anderen münden. Diese Ausführungen werden unter dem Begriff "ein Kühlkanal" subsumiert, da sie nicht unabhängig voneinander sind, sondern in Strömungsverbindung miteinander stehen.

Bei mehreren unabhängigen Kühlkanälen besteht eine derartige Strömungsverbindung zwischen den einzelnen Kühlkanälen nicht.

Es ist auch eine andere, also die voranstehend genannte Aufteilung von 3 : 1 unabhängigen Kühlkanälen möglich, beispielsweise nur zwei untere und ein oberer, oder zwei obere und vier untere, etc.

Durch die höhere Anzahl an voneinander unabhängigen Kühlkanälen der unteren Kühleinrichtung 31, kann genauer auf die Abkühlung des ersten Stranges 22 Einfluss genommen werden, wodurch die thermischen Bedingungen des ersten Stranges genauer kontrolliert werden können und damit die Haftfestigkeit des zweiten, oberen Stranges 25 auf dem ersten, unteren Strang verbessert werden kann.

Ebenfalls zur besseren Kontrolle der thermischen Bedingungen des ersten Stranges an der ersten Oberfläche 24 kann nach einer weiteren, bevorzugten Ausführungsvariante vorgesehen sein, dass der erste Strang 22 im Bereich einer linken und einer rechten, seitlichen Stirnfläche 40 gekühlt wird. Dies erfolgt bevorzugt durch den Kontakt des ersten Stranges 22 mit den seitlichen Stirnflächen 40 mit einem Werkstoff, der eine geringere Wärmeleitfähigkeit aufweist als Kupfer. Besonders bevorzugt erfolgte die Kühlung der seitlichen Stirnflächen 40 durch deren Kontakt mit Grafitleisten, die seitlich nach der Gießdüse 30 angeordnet werden können bzw. sind. Die Grafitleisten passiv gekühlt sein, oder können gemäß einer weiteren Ausführungsvariante der Vorrichtung 1 auch indirekt gekühlt sein, wozu diese in direktem Kontakt mit wassergekühlten Kupferleisten stehen können bzw. letzter an den Grafitleisten angeordnet sind. Die Kupferleisten können dabei auch als Träger für die Grafitleisten fungieren. Es wird damit ein homogeneres Temperaturprofil im Bereich der ersten Oberfläche 24 im ersten Strang 22 erreicht, sodass die Bindungsqualität zwischen dem ersten Strang 22 und dem zweiten Strang 25 über die gesamte Breite des ersten Stranges 22 (in Draufsicht auf die Fig. 9, d.h. senkrecht auf die Blattebene, betrachtet) verbessert werden kann. Es kann damit mit höherer Qualität erreicht werden, dass die Erstarrungsfront des ersten unteren Stranges 22 zumindest im Bereich der ersten Oberfläche 24 zumindest annähernd geradlinig, insbesondere geradlinig, ausgebildet wird. Insbesondere wird damit erreicht, dass beim Aufgießen des zweiten Stranges 25 über die Gießbreite homogenere thermische Verhältnisse vorliegen.

Zur Seitenkühlung des ersten Stranges 22 ist es im Falle einer indirekten Wasserkühlung der Grafitleisten gemäß einer weiteren Ausführungsvariante von Vorteil, wenn dazu ein relativ geringer Wasservolumenstrom verwendet wird, der zwischen 0,5 1/Minute und 1 1/Minute betragen kann, sodass das Wasser eine Temperatur aufweist, die nahe am Verdampfungspunkt liegt.

Alternativ dazu ist es auch möglich, dass die seitlichen Stirnflächen 40 des ersten Stranges 22 nach der Gießdüse 30 temperiert werden, beispielsweise wiederum über direkt oder indirekt geheizte Grafitleisten. Die Temperierung kann beispielsweise mit einem Öl als Trägermedium erfolgen.

Nach einer weiteren Ausführungsvariante des Verfahrens kann vorgesehen sein, dass der zweite Strang 25 nach dem Aufgießen auf die erste Oberfläche 24 des ersten Strangs 22 mit einer weiteren Kühleinrichtung 41, die einen weiteren Kühlkreislauf 42 aufweist, abgekühlt wird, wobei die Erstarrungsfront des zweiten Stranges 25 vor diesem weiteren Kühlkreislauf 42 ausgebildet wird. Der weitere Kühlkreislauf 42 ist also in Produktionsrichtung nach und beabstandet zur Gießdüse 38 der Aufgusseinheit 37 angeordnet. Damit kann erreicht werden, dass der Werkstoff zur Herstellung der Aufgussschicht 18 möglichst lange im schmelzflüssigen Zustand bleibt, wodurch die Ausbildung des kontinuierlichen Korngrenzenverlaufs zwischen dem Substrat 17und der Aufgussschicht 18, also der Bindeschicht 3 und der Lagermetallschicht 4 im fertigen Mehrschichtgleitlagerelement 14, verbessert werden kann.

Dabei ist es aus voranstehend Gründen auch von Vorteil, wenn gemäß einer weiteren Ausführungsvariante des Verfahrens die Abkühlung der beiden Stränge 22, 25 so gestaltet wird, dass die erste Aluminiumbasislegierung mit einem im Wesentlichen globularen Gefüge und die zweite Aluminiumbasislegierung mit einem im Wesentlichen dentritischen Gefüge hergestellt wird. Die Korngröße kann dabei zwischen 5 µm und 100 µm betragen.

Die weitere Kühleinrichtung 41 weist bevorzugt eine Grafitplatte 43 auf, die indirekt gekühlt wird, beispielsweise mit einem Kupferkühler, der von einem Kühlmittel, beispielsweise Wasser, durchströmt wird. Durch die Grafitplatte 43 kann eine Verringerung der Haftung der weiteren Kühleinrichtung 41 an dem zweiten Strang 25 erreicht werden, wodurch auf eine zusätzliche Schmierung verzichtet werden kann. Darüber hinaus weist Grafit eine relativ geringe Wärmeleitfähigkeit auf (verglichen mit Kupfer), wodurch die Ausbildung des kontinuierlichen Korngrenzenverlaufs weiter begünstigt wird.

Über die Oberflächentopographie des an dem ersten Strang 22 anliegenden ersten, unteren Bandes 27 und des zweiten, oberen Bandes 28 kann dem ersten Strang 22 eine entsprechende Oberflächentopographie verliehen werden, die sich positiv auf den Verbund mit der Stützschicht 2 und/oder des oberen Stranges 25 auswirken kann.

Ein Vormaterial 11 kann beispielsweise wie folgt hergestellt werden.
Substrat 17 AlSn25Cu1Mn mit 12mm Dicke
Aufgussschicht 18 Al99,5 mit 12mm Dicke
somit D=1
Schmelzetemperatur Aluminiumlegierungsschmelze 23: 780-820°C
Gießtemperatur 660-700°C
Gießgeschwindigkeit 0,5-0,6m/min
Schmelzetemperatur Aluminiumschmelze 26: 820-850°C
Gießtemperatur Aufguss 750-800°C
Substratbandtemperatur bei Aufguss 500-550°C
Kühlleistung / Durchfluss Seitenleisten erster Strang 22: 5-10 l/min

Durch das Aufgießen der Aufgussschicht 18 auf das Substrat 17 wird dieses oberflächlich wieder aufgeschmolzen. Die aufgeschmolzene Zone kann bis in eine Tiefe in das Substrat 17, gemessen von der Oberfläche 14, reichen, die zwischen 1 mm und 5 mm beträgt.

Das so hergestellte Vormaterial 11 wies eine Haftfestigkeit der Schichten im Gusszustand, gemessen mit adaptierten Zugversuch (es wurden ein quaderförmiger Probekörper mit einer Dicke von 3 mm und seitlich verschraubte Klemmbacken verwendet) von mindestens 60 N/mm² auf, d.h. die Haftfestigkeit ist damit höher, als die Zugfestigkeit der schwächeren Komponente Al99,7 die eine Zugfestigkeit von ca. 45 N/mm² unter gleichen Messbedingungen aufweist.

Ähnliche Ergebnisse wurden auch mit anderen Werkstoffkombinationen (siehe nachfolgende Tabellen) erhalten.

Für die Verbundfestigkeit, d.h. die Ausbildung des Verbundes zwischen der Bindeschicht 3 und der Lagermetallschicht 4, hat es sich als vorteilhaft erwiesen, wenn für die Herstellung des ersten und des zweiten Stranges 22, 25 Aluminiumbasislegierungen verwendet werden, deren Schmelzpunkte sich um maximal 15 % unterscheiden, bezogen auf den Schmelzpunkt der höher schmelzenden Aluminiumbasislegierung oder dass bei Verwendung von Aluminium zur Herstellung des ersten oder des zweiten Stranges 22, 25 die für den anderen Strang verwendete Aluminiumbasislegierung einen Schmelzpunkt aufweist, die um maximal 15 % höher ist, als der Schmelzpunkt von Aluminium. Beispiele hierfür sind die Kombination aus Al99 Bindeschicht 3 mit einem Schmelzpunkt von ca. 660°C und AlSn40Cu1Mn Lagermetallschicht 4 mit einem Schmelzpunkt von ca. 615°C oder die Kombination einer AlZn5MgCu Bindeschicht mit einem Schmelzpunkt von ca. 650°C und AlSn20Cu Lagermetallschicht mit einem Schmelzpunkt von ca. 630°C.

Für die schmelzmetallurgische Verbindung der Bindeschicht 3 mit der Lagermetallschicht 4, hat sich für das Aufgießen und damit in weiterer Folge für die Verbundfestigkeit des Verbundes Bindeschicht 3/Lagermetallschicht 4 als vorteilhaft herausgestellt, wenn für das Aufgießen ein Schichtdickenverhältnis D zwischen 2 : 1 und 1 : 10, insbesondere zwischen 3 : 2 und 2: 3, beträgt, wobei das Schichtdickenverhältnis D das Verhältnis des Schichtdicke des Substrates zur Schichtdicke der jeweiligen Aufgussschicht ist. Beispielsweise beträgt die Schichtdicke (im Gusszustand) der Lagermetallschicht 4 als Substrat 8 mm und die Schichtdicke der Bindeschicht 3 als Aufgussschicht 4 mm.

Das nach einer dieser Verfahrensvarianten hergestellte Verbundgussmaterial kann in weiterer Folge einer Dickenreduktion auf das benötigte Stützschicht 2-Plattiermaß mittels Kaltwalzen in Abhängigkeit von Material und Dicke, gegebenenfalls mit zumindest einer Zwischenglühung, um die Verformbarkeit zu verbessern, und gegebenenfalls Einstellung eines Konzentrationsprofil von zumindest einem Legierungselement zwischen der Lagermetallschicht 4 und der Bindeschicht 3, unterzogen werden. Die dadurch gewonnen Bänder können dann auf das benötigte Längen- und Breitenmaß geschnitten, gerichtet, gereinigt, entfettet und mittels Schleifprozess die Oberfläche auf Seite der Bindeschicht 3 aktiviert werden

Die Verbindung des Vormaterials 11 über die Bindeschicht 3 mit der Stützschicht 2 erfolgt vorzugsweise durch Walzplattieren.

Danach können weitere Wärmebehandlung zur Einstellung eines geeigneten Gefüges in der Lagermetallschicht 4 und/oder zur Verbesserung der Bindung zw. den verschiedenen Schichten und/oder zur Einstellung eines Konzentrationsgradienten für zumindest einen Legierungsbestandteil zwischen der Lagermetallschicht 4 und der Bindeschicht 3, durchgeführt werden.

Es ist weiter möglich, dass die jeweilige Aufgussschicht, also die Lagermetallschicht 4 oder die Bindeschicht 3, durch mehrmaliges Aufgießen der Werkstoffschmelze für die Schicht hergestellt wird, also in der Folge die Lagermetallschicht 4 oder die Bindeschicht 3 aus zumindest zwei Teilschichten aufgebaut ist.

Zur Evaluierung der Erfindung wurden folgende Versuche durchgeführt.

Mittels der Vorrichtung 16 wurden Verbunde hergestellt, bei denen auf die feste Lagermetallschicht 4 (Substrat) der Werkstoff für die Bindeschicht 3 aufgegossen wurde (Versuchsnummer 1 bis 10) und Verbunde, bei denen auf die feste Bindeschicht 3 (Substrat) der Werkstoff für die Lagermetallschicht 4 aufgegossen wurde (Versuchsnummer 11 und 12). Nachfolgende Tabelle 1 zeigt eine Auswahl an hergestellten Verbunden.

**Tabelle 1: Versuchsvarianten**

| Versuchsnummer | Substratlegierung | Aufgusslegierung | Verhältnis D |
|---|---|---|---|
| 1 | AlSn6Cu1Ni1 | Al99,5 | 1 |
| 2 | AlSn6Cu1Ni1 | AlZn4Si1,5 | 1,2 |
| 3 | AlSn20Cu1 | Al99,5 | 1 |
| 4 | AlSn20Cu1 | AlZn4Si1,5 | 1,2 |
| 5 | AlSn25Cu1Mn | Al99,5 | 1 |
| 6 | AlSn25Cu1Mn | AlZn4Si1,5 | 1,2 |
| 7 | AlSn40Cu1 | Al99,5 | 1 |
| 8 | AlZn5Bi5MnZr | Al99,5 | 1 |
| 9 | AlZn5Bi5MnZr | AlZn4Si1,5 | 1,2 |
| 10 | AlZn5Bi5MnZr | AlZn5CuMg | 1,5 |
| 11 | Al99,5 | AlSn6Cu1Ni1 | 0,1 |
| 12 | AlZn4Si1,5 | AlSn25Cu1Mn | 0,25 |
| 13 | AlCu1Mn | AlSn25Cu1Mn | 1 |
| 14 | AlCu1Mn | AlSn20Cu1 | 1 |
| 15 | AlCu1Mn | AlSn6Cu1Ni | 1 |
| 16 | AlSn25Cu1Mn | AlCu1Mn | 1 |
| 17 | AlSn20Cu1 | AlCu1Mn | 1 |
| 18 | AlSn6Cu1Ni | AlCu1Mn | 1 |

Es ist an dieser Stelle nochmals zu erwähnen, dass das Verhältnis D, das Dickenverhältnis des Verbundes nach dem Gießvorgang beschreibt. Durch optionale Weiterverarbeitungsschritte kann das Verhältnis entsprechend der benötigten Schichtdicken im fertigen Gleitlager beliebig und je nach erforderlicher Anwendung eingestellt werden. Folgende Tabelle 2 zeigt entsprechende Ausführungsvarianten.

**Tabelle 2: Mögliche Ausführungsbeispiele**

| Nr. | Grundkörper | Bindeschicht | Lagerlegierung | Schichtdicken | |
|---|---|---|---|---|---|
| | | A1 | A2 | A1 (mm) | A2 (mm) |
| 1 | Stahl | Al99,5 | AlSn6Cu1Ni1 | 0,2 | 0,6 |
| 2 | Stahl | Al99,5 | AlSn20Cu1 | 0,2 | 0,6 |
| 3 | Stahl | Al99,5 | AlSn25Cu1Mn | 0,2 | 0,6 |
| 4 | Stahl | Al99,5 | AlZn5Bi5MnZr | 0,2 | 0,6 |
| 5 | Stahl | AlZn4Si1,5 | AlSn6Cu1Ni1 | 0,2 | 0,6 |
| 6 | Stahl | AlZn4Si1,5 | AlSn25Cu1Mn | 0,2 | 0,6 |
| 7 | Stahl | AlZn4Si1,5 | AlZn5Bi5MnZr | 0,2 | 0,6 |
| 8 | Stahl | Al99,0 | AlSn6Cu1Ni1 | 0,2 | 0,6 |
| 9 | Stahl | Al99,0 | AlZn5Bi5MnZr | 0,2 | 0,6 |
| 10 | Stahl | AlZn5CuMg | AlSn25Cu1Mn | 0,1 | 0,7 |
| 11 | Stahl | AlZn5CuMg | AlSn25Cu1Mn | 0,2 | 0,6 |
| 12 | Stahl | AlZn5CuMg | AlSn25Cu1Mn | 0,4 | 0,4 |
| 13 | Stahl | AlZn5CuMg | AlZn5Bi5MnZr | 0,1 | 0,7 |
| 14 | Stahl | AlZn5CuMg | AlZn5Bi5MnZr | 0,2 | 0,6 |
| 15 | Stahl | AlZn5CuMg | AlZn5Bi5MnZr | 0,4 | 0,4 |
| 16 | Stahl | Al99,5 | AlSn40Cu1 | 0,2 | 0,6 |
| 17 | Stahl | Al99,0 | AlSn40Cu1 | 0,2 | 0,6 |
| 18 | Stahl | AlZn4Si1,5 | AlSn40Cu1 | 0,2 | 0,6 |
| 19 | Stahl | Al99,0 | AlSn6Cu1Ni1 | 0,1 | 0,4 |
| 20 | Stahl | AlZn4Si1,5 | AlSn25Cu1Mn | 0,1 | 0,4 |
| 21 | Stahl | AlZn4Si1,5 | AlSn25Cu1Mn | 0,4 | 0,1 |
| 22 | Stahl | Al99,5 | AlZn5Bi5MnZr | 0,1 | 0,4 |
| 23 | Stahl | AlZn5CuMg | AlZn5Bi5MnZr | 0,1 | 0,4 |
| 24 | Stahl | AlZn5CuMg | AlZn5Bi5MnZr | 0,4 | 0,1 |
| 25 | Stahl | Al99,5 | AlSn40Cu1 | 0,5 | 1,0 |
| 26 | Stahl | Al99,5 | AlSn40Cu1 | 0,5 | 1,5 |
| 27 | CuSn5Zn | Al99,0 | AlSn6Cu1Ni1 | 0,2 | 0,6 |
| 28 | CuSn5Zn | AlZn4Si1,5 | AlSn6Cu1Ni1 | 0,2 | 0,6 |

Es würde den Rahmen dieser Beschreibung sprengen, zu all den Versuchsvarianten die Testergebnisse ausführlich wieder zu geben. Daher wird dies im Folgenden auf verschiedene Varianten beschränkt.

Für die im Folgenden wiedergegebenen Tests wurden Prüfteile für die Verwindungsprüfung, die Wechselbiegeprüfung und die Fressgrenzlastprüfung hergestellt. Zum Vergleich wurden auch walzplattierte Verbunde gleichen Aufbaus und gleicher Zusammensetzung wie in den Beispielen angegeben geprüft.

Bei der Verwindungsprüfung wird die Probe einer Torsionsbeanspruchung ausgesetzt, wobei eine Verwindung einer Verdrehung der Probe um jeweils 90 ° wechselweise nach rechts und links entspricht. Nach jeder Verwindung wird die Probe auf Ablösungen hin untersucht. Die Verwindungsanzahl einer Probe entspricht der Anzahl an Verwindungen bis zum Auftreten erster Ablösungen mit definierter Form und Ausdehnung.

Bei der Wechselbiegeprüfung wird die Probe einer Biegebeanspruchung (weggesteuert) mit einem R-Wert von -1 (reine Wechselbeanspruchung) bei einer bestimmten Frequenz beaufschlagt. Die Rissdetektion erfolgt mittels aufgeklebter Widerstandsmessstreifen.

Bei der Fressgrenzlastprüfung wird die Lagerschale in einer Lagerprüfmaschine bei einer konstanten Wellen-Umfangsgeschwindigkeit von 12,6 m/s, einem konstanten Öldurchfluss von 1,1 l/min, einer konstanten Öltemperatur von 120°C mit einer stufenförmig steigenden Last beaufschlagt. Bei diesem Test wird jeweils eine Serie, bestehend aus mindestens drei Gleitlagern gleicher Bauart unter vergleichbaren Bedingungen der beschriebenen Belastung ausgesetzt, bis zum Auftreten eines Fressens bzw. bis zum Erreichen der maximalen Laststufe. Die für alle Gleitlager der jeweiligen Serie aus der beim Auftreten des Fressens in MPa gemessenen Grenzlast bzw. maximalen Laststufe in MPa berechnete durchschnittliche Fresslast wird dann in ein Blockdiagramm eingezeichnet.

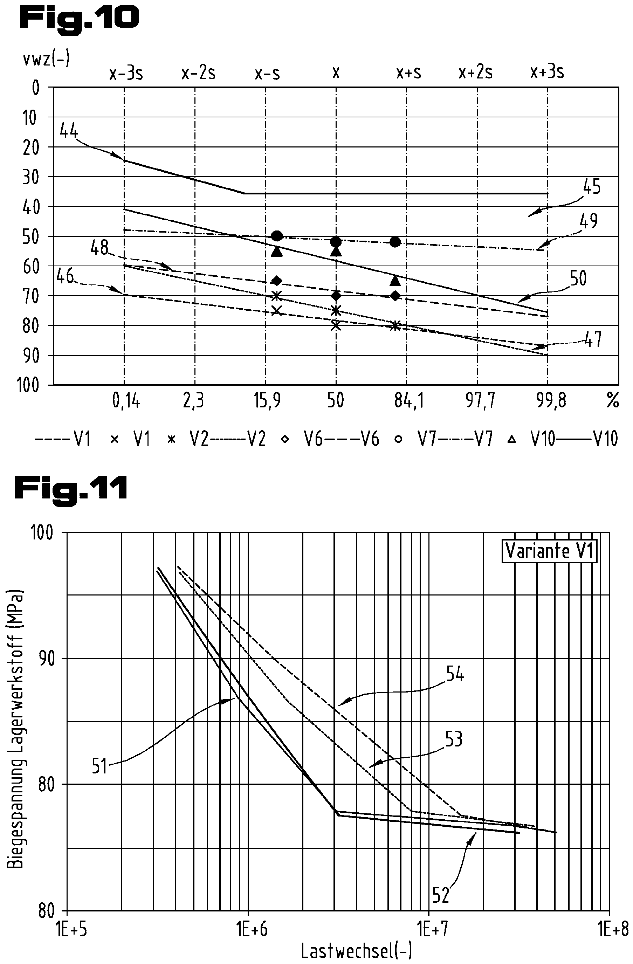

In Fig. 10 sind die Ergebnisse der Verwindungsprüfung als Test für die qualitative Haftfestigkeit dargestellt. Diese Prüfung dient zur Ermittlung von Vergleichswerten für die Festigkeit der Verbindung (Haftfestigkeit) zwischen den einzelnen Schichten. Die Prüfung und die ihr zugrunde liegenden Vergleichswerte für die Haftfestigkeit gelten nur für den Vergleich von Zustand, Form und Abmessung völlig gleicher Proben. Die Prüfung erfolgt durch Verdrehen einer einseitig fest verspannten Probe um jeweils 90 ° wechselweise nach rechts und links. Eine Auslenkung um 90 ° nach rechts und links und die anschließende Rückkehr zur Mittellage wird zusammen als eine Verwindung bezeichnet. Bei der Prüfung wird die Probe mit einer vorab eingestellten Anzahl an Verwindungen beaufschlagt, wobei die eingestellten Verwindungen hintereinander durchgeführt werden. Kommt es während der Prüfung zu Rissen und/oder Ablösungen, wird die Prüfung beendet und die bis dato durchgeführten Verwindungen in das Prüfprotokoll eingetragen.

In Fig. 10 ist die Verwindungsanzahl jeder Probe an der Abszisse im Wahrscheinlichkeitsnetz prozentuell in der Zeile in der die Probe eingetragen ist, durch einen Messpunkt aufgetragen. Auf der Ordinate ist die absolute Verwindungsanzahl aufgetragen. Von jeder Versuchsvariante wurden mindestens drei Prüfungen durchgeführt (je Variante mindestens drei Messpunkte im Wahrscheinlichkeitsnetz). Zur besseren Einordnung der jeweiligen Messwerte wird zusätzlich die Ideallinie (Trennlinie) im Wahrscheinlichkeitsnetz dargestellt.

Bei dieser Prüfung ist weiteres zu erwähnen, dass bei diesen Tests nur die Haftung zwischen der Bindeschicht 3 und der Lagermetallschicht 4 geprüft wurde. Eine Prüfung der Haftfestigkeit zwischen Stahl - Stützschicht 2 und Bindeschicht 3 ist entsprechend auch möglich, wurde jedoch zur Bewertung der in Tabelle 1 aufgeführten Varianten nicht durchgeführt.

Es zeigt sich, dass die qualitative Haftfestigkeit, ermittelt über die Verwindungsprüfung, oberhalb einer Annahmelinie 44 (beschreibt die mindestens zu erreichende Verwindungsanzahl) und oberhalb des Bereiches 45 walzplattierter Verbunde liegt. Die erfindungsgemäßen Verbunde (vgl. Tabelle 1, Versuchsnummern 1, 2, 6, 7 und 10) sind durch die Kurven 46 bis 50 dargestellt.

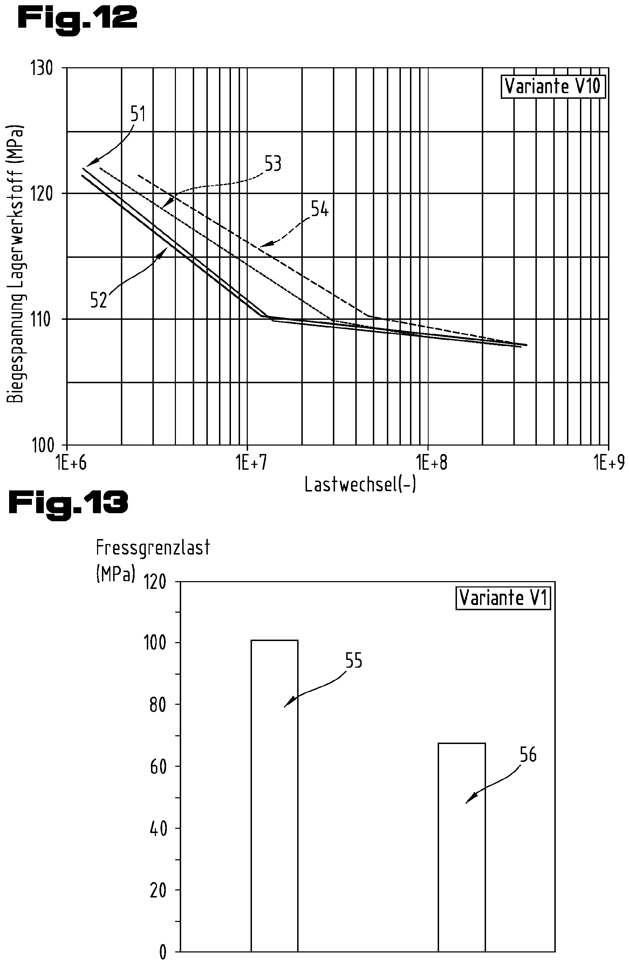

In Fig. 11 und Fig. 12 sind die Ergebnisse des Wechselbiegeversuchs als Test für die Dauerschwingfestigkeit des Mehrschichtgleitlagerelements 14 gemäß DIN 50142 bei Raumtemperatur dargestellt. Dabei sind auf der Ordinate die Spannung in MPa und auf der Abszisse die Anzahl der Lastwechsel bis zur ersten Rissdetektion (Schadenslinie 51, 52) sowie der Zeitpunkt des Probenbruches (Versagenslinie / Wöhlerlinie 53, 54) in einem logarithmischen Maßstab aufgetragen.

Es sei an dieser Stelle darauf hingewiesen, dass sämtliche Angaben zu Normen in dieser Beschreibung sich auf die zum Anmeldetag gültige Fassung der jeweiligen Norm beziehen.

Bei dieser Prüfung ist zu erwähnen, dass die Tests nur an Verbunden bestehend aus Bindeschicht 3 und Lagermetallschicht 4 mit einem fertig bearbeiteten Schichtdickenverhältnis von 1 : 1 durchgeführt wurden, um Unterschiede hinsichtlich Qualität der Haftung zwischen den erfindungsgemäßen Verbunden und den Verbunden aus dem Stand der Technik zu ermitteln.

Aus Fig. 11 und Fig.12 ist ersichtlich, dass die Dauerschwingfestigkeiten der erfindungsgemäßen Verbunde, ersichtlich aus den Schadenslinien 52, prinzipiell auf dem gleichen Niveaus liegen, wie die Dauerschwingfestigkeiten der Verbunde aus dem Stand der Technik, ersichtlich aus den Schadenslinien 51. Dieses Ergebnis ist jedoch nicht überraschend, da die Verbunde jeweils aus den gleichen Legierungskombinationen bestehen. Ein wesentlicher Vorteil der erfindungsgemäßen Verbunden gegenüber den Verbunden aus dem Stand der Technik ist jedoch ersichtlich aus der Lage der Versagenslinien / Wöhlerlinien (Kurven 53 und 54). Der Bereich zwischen Schadenslinie 52 und Versagenslinie / Wöhlerlinie 54, d.h. der Bereich der Überbeanspruchung mit Werkstoffschädigung, ist bei den erfindungsgemäßen Verbunden größer, als bei den Verbunden aus dem Stand der Technik, begrenzt durch die Schadenslinie 51 und Versagenslinie / Wöhlerlinie 53. Für die Funktionalität des Bauteiles aus einem erfindungsgemäßen Verbund, bedeutet dies, dass ein völliges Versagen der Lagerschale bzw. des Laufschichtverbundes (z.B. Ablösungen der Laufschicht) später eintritt, als bei Lagerschalen hergestellt aus Verbunden aus dem Stand der Technik. In anderen Worten gesagt, ertragen die erfindungsgemäßen Verbunde ein höheres Maß an Vorschädigung ehe es zum völligen Versagen kommt.

Die Fig. 13 zeigt die Ergebnisse der Fressgrenzlastprüfung in Form eines Blockdiagrammes. Der erfindungsgemäße Verbund weist mit einer durchschnittlichen Fressgrenzlast von 100 MPa einen wesentlich höheren Wert auf (Balken 55), als der Verbund aus dem Stand der Technik (Balken 56), der bei einer mittleren Fressgrenzlast von 68 MPa liegt.

Zum Vergleich wurden auch walzplattierte Verbunde gleichen Aufbaus und gleicher Zusammensetzung wie in den Beispielen angegeben hergestellt. Diese Vergleichsbeispiele wurden anschließend einer Wärmebehandlung (Langzeit-Glühung für 3 Stunden bei 350 °C und für 120 Stunden bei 400 °C) unterzogen. Dabei veränderten sich die Grenzflächen zwischen der Bindeschicht und der Lagermetallschicht nicht. D.h. mit anderen Worten, dass eine plattierte Verbindung nicht in eine mittels Verbundguss hergestellte Verbindung überführt werden kann.

Die Lagermetallschicht 4 und/oder die Bindeschicht 3 können mit Körnern 9, 10 mit einer minimalen mittleren Korngröße von 20µm hergestellt werden. Insbesondere können die Lagermetallschicht 4 und/oder die Bindeschicht 3 auch mit einer Schichtdicke von mehr als 100 µm hergestellt werden.

Das Mehrschichtgleitlager 14 kann in allen Motorengrößen und -Arten verwendet werden, beispielsweise für LKW-Motoren oder große Zwei-Takt Schiffsmotoren oder PKW-Motoren.

Die Ausführungsbeispiele zeigen und beschreiben mögliche Ausführungsvarianten des Mehrschichtgleitlagerelements 14 sowie des Verfahrens zu dessen Herstellung, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Mehrschichtgleitlagerelements 14 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Gleitlager | 31 | Kühleinrichtung |
| 2 | Stützschicht | 32 | Kühlkanal |
| 3 | Bindeschicht | 33 | Kühlplatte |
| 4 | Lagermetallschicht | 34 | Kühleinrichtung |
| 5 | Weichphase | 35 | Kühlkanal |
| 6 | Grenzschicht | 36 | Kühlplatte |
| 7 | Oberfläche | 37 | Aufgusseinheit |
| 8 | Oberfläche | 38 | Gießdüse |
| 9 | Korn | 39 | Oberfläche |
| 10 | Korn | 40 | Stirnfläche |
| 11 | Vormaterial | 41 | Kühleinrichtung |
| 12 | Verbindungsbereich | 42 | Kühlkreislauf |
| 13 | Korngrenze | 43 | Grafitplatte |
| 14 | Mehrschichtgleitlagerelement | 44 | Annahmelinie |
| 15 | Gleitschicht | 45 | Bereich |
| 16 | Vorrichtung | 46 | Kurve |
| 17 | Substrat | 47 | Kurve |
| 18 | Aufguss schicht | 48 | Kurve |
| 19 | Zone | 49 | Kurve |
| 20 | Zone | 50 | Kurve |
| 21 | Zone | 51 | Schadenslinie |
| 22 | Strang | 52 | Schadenslinie |
| 23 | Aluminium(legierungs)schmelze | 53 | Wöhlerlinie |
| 24 | Oberfläche | 54 | Wöhlerlinie |
| 25 | Strang | 55 | Balken |
| 26 | Aluminium(legierungs)schmelze | 56 | Balken |
| 27 | Band | | |
| 28 | Band | | |
| 29 | Abstand | | |
| 30 | Gießdüse | | |

## Patentansprüche

1. Mehrschichtgleitlagerelement (14) aus einem Verbundmaterial umfassend eine Stützschicht (2), eine mit der Stützschicht (2) verbundene Bindeschicht (3) und eine mit der Bindeschicht (3) verbundene Lagermetallschicht (4), wobei die Bindeschicht (3) aus Aluminium oder einer ersten, weichphasenfreien Aluminiumbasislegierung und die Lagermetallschicht (4) aus einer zweiten, zumindest eine aus einer Gruppe bestehend aus Sn, Bi, In, Pb, sowie Mischungen daraus, ausgewählte Weichphase mit einem Anteil zwischen 3 Gew.-% und 49.9 Gew.-%, insbesondere zwischen 3 Gew.-% und 40 Gew.-%, enthaltenden Aluminiumbasislegierung bestehen, wobei die erste und die zweite Aluminiumbasislegierung zumindest ein Element enthalten, das ausgewählt ist aus einer Gruppe umfassend oder bestehend aus Si, Sb, Cu, Mn, Mg, Zn, Co, Zr, Ni, Sc, Er, Ti, V, Nb, Ta, wobei weiter der Anteil des zumindest einen Legierungselementes zwischen 0,5 Gew.-% und 15 Gew.-% beträgt und der Summenanteil an diesen Legierungselementen in der jeweiligen, Aluminiumbasislegierung zwischen 0,5 Gew.-% und 25 Gew.-% beträgt, und die Bindeschicht (3) mit der Lagermetallschicht (4) unter Ausbildung einer zwischen der Bindeschicht (3) und der Lagermetallschicht (4) angeordneten Bindezone über eine schmelzmetallurgische Verbindung miteinander verbunden sind, wobei in der Bindezone Körner (9,10) ausgebildet sind, wobei in der Bindezone ein kontinuierlicher Korngrenzenverlauf zwischen der Bindeschicht (3) und der Lagermetallschicht (4) ausgebildet ist, **dadurch gekennzeichnet, dass** die Bindezone eine Schichtdicke zwischen 10 µm und 200 µm, insbesondere zwischen 10 µm und 100 µm, aufweist.

2. Mehrschichtgleitlagerelement (14) nach Anspruch 1, **dadurch gekennzeichnet, dass** die erste Aluminiumbasislegierung der Bindeschicht (3) und/oder die zweite Aluminiumbasislegierung der Lagermetallschicht (4) zumindest ein Legierungselement aufweist oder aufweisen, das in der zwischen der Bindeschicht (3) und der Lagermetallschicht (4) ausgebildeten Bindezone einen Konzentrationsgradient aufweist.

3. Mehrschichtgleitlagerelement (14) nach Anspruch 1 oder 2, **dadurch gekennzeichnet, dass** die Korngröße der Körner (9, 10) in der zwischen der Bindeschicht (3) und der Lagermetallschicht (4) ausgebildeten Bindezone einen mittleren Durchmesser von maximal 100 µm aufweisen.

4. Mehrschichtgleitlagerelement (14) nach einem der Ansprüche 1 bis 3, **dadurch gekennzeichnet, dass** ein Anteil von mindestens 25 % der Körner (9, 10), bezogen auf die Gesamtheit der Körner (9, 10) in der Bindezone, zumindest in der zwischen der Bindeschicht (3) und der Lagermetallschicht (4) ausgebildeten Bindezone einen globularen Habitus aufweisen.

5. Mehrschichtgleitlagerelement (14) nach einem der Ansprüche 1 bis 4, **dadurch gekennzeichnet, dass** die erste Aluminiumbasislegierung der Bindeschicht (3) mit Ausnahme des zumindest einen Weichphasenelementes die gleiche qualitative Zusammensetzung aufweist, wie die zweite Aluminiumbasislegierung der Lagermetallschicht (4).

6. Verfahren zur Herstellung eines Mehrschichtgleitlagerelements (14) nach einem der Ansprüche 1 bis 5, umfassend die Schritte:
- Herstellen eines zweischichtigen Vormaterials (11) aus der ersten Aluminiumbasislegierung oder aus Aluminium, die eine erste Schicht des Vormaterials (11) bildet, und der zweiten Aluminiumbasislegierung, die eine zweite Schicht des Vormaterials (11) bildet, durch Verbundguss;
- Verbinden des zweischichtigen Vormaterials (11) mit einem Substrat, das eine Stützschicht (2) des Mehrschichtgleitlagerelements (14) bildet, durch Walzplattieren;
- Fertigbearbeiten des Walzverbundmaterials zum Mehrschichtgleitlagerelement (14),
**dadurch gekennzeichnet, dass**
der Verbundguss zur Herstellung des Vormaterials (11) in einer Vorrichtung (16) durchgeführt wird, die zumindest drei verschiedene Zonen aufweist, wobei in einer ersten Zone (19) ein erster Strang (22) aus Aluminium aus einer Aluminiumschmelze oder aus einer der Aluminiumbasislegierungen aus einer ersten Aluminiumlegierungsschmelze (23) hergestellt wird, in einer zweiten Zone (20) der erste Strang (22) aus der Aluminiumschmelze oder der ersten Aluminiumbasislegierungsschmelze (23) soweit abgekühlt wird, dass dieser eine erstarrte erste Oberfläche (24) aufweist, und dass in einer dritten Zone (21) auf die erstarrte erste Oberfläche (24) ein zweiter Strang (25) aus Aluminium aus einer Aluminiumschmelze oder der anderen Aluminiumbasislegierung aus einer zweiten Aluminiumlegierungsschmelze (26) aufgegossen wird, mit der Maßgabe, dass bei Verwendung von Aluminium der jeweils andere Strang (22 oder 25) aus der zweiten Aluminiumbasislegierung hergestellt wird, dass weiter der erste Strang (22) im Bereich der ersten Oberfläche (24) mit einer Abkühlrate abgekühlt wird, die ausgewählt ist aus einem Bereich von 1 °C/s bis 15 °C/s und dass der erste Strang (22) im Bereich der ersten Oberfläche (24) auf eine Temperatur abgekühlt wird, die nicht kleiner als 400 °C ist.

7. Verfahren nach Anspruch 6, **dadurch gekennzeichnet, dass** die Abkühlung des ersten Stranges (22) in einer Kühlstrecke durchgeführt wird, die obere, der ersten Oberfläche (24) des ersten Stranges (22) zugeordnete, und untere, einer zweiten Oberfläche (39) des ersten Stranges (22) zugeordnete Kühlkreisläufe aufweist, wobei die Anzahl des oberen Kühlkreislaufs oder der oberen Kühlkreisläufe kleiner ist, als die Anzahl der unteren Kühlkreisläufe.

8. Verfahren nach einem der Ansprüche 6 bis 7, **dadurch gekennzeichnet, dass** der erste Strang (22) im Bereich von seitlichen Stirnflächen (40) gekühlt wird.

9. Verfahren nach einem der Ansprüche 6 bis 8, **dadurch gekennzeichnet, dass** der zweite Strang (25) nach dem Aufgießen auf die erste Oberfläche (24) des ersten Strangs (22) mit einem weiteren Kühlkreislauf abgekühlt wird, wobei die Erstarrungsfront des zweiten Stranges (25) vor diesem weiteren Kühlkreislauf ausgebildet wird.

10. Verfahren nach einem der Ansprüche 6 bis 9, **dadurch gekennzeichnet, dass** die erste Aluminiumbasislegierung mit einem globularen Gefüge und die zweite Aluminiumbasislegierung mit einem dentritischen Gefüge hergestellt werden.

11. Verfahren nach einem der Ansprüche 6 bis 10, **dadurch gekennzeichnet, dass** für die Herstellung des ersten und des zweiten Stranges (22, 25) Aluminiumbasislegierungen verwendet werden, deren Schmelzpunkte sich um maximal 15 % unterscheiden, bezogen auf den Schmelzpunkt der höher schmelzenden Aluminiumbasislegierung oder dass bei Verwendung von Aluminium zur Herstellung des ersten oder des zweiten Stranges (22 oder 25) die für den anderen Strang (25 oder 22) verwendete Aluminiumbasislegierung einen Schmelzpunkt aufweist, die um maximal 15 % höher ist, als der Schmelzpunkt von Aluminium.

12. Verfahren nach einem der Ansprüche 6 bis 11, **dadurch gekennzeichnet, dass** das Vormaterial (11) mit einem Schichtdickenverhältnis D zwischen 2 : 1 und 1: 10 hergestellt wird, wobei das Schichtdickenverhältnis das Verhältnis des Schichtdicke des ersten Stranges (22) zur Schichtdicke des zweiten Stranges (25) nach dem Gießprozess ist.

## Claims

1. A multi-layer sliding bearing element (14) made from a composite material comprising a support layer (2), a bonding layer (3) joined to the support layer (2) and a bearing metal layer (4) joined to the bonding layer (3), wherein the bonding layer (3) is made from aluminum or a first, soft-phase-free aluminum base alloy and the bearing metal layer (4) is made from a second aluminum base alloy containing at least one soft phase selected from a group consisting of Sn, Bi, In, Pb, as well as mixtures thereof, with a share of between 3 wt.% and 49.9 wt.%, in particular between 3 wt.% and 40 wt.%, wherein the first and the second aluminum base alloy contain at least one element selected from a group comprising or consisting of Si, Sb, Cu, Mn, Mg, Zn, Co, Zr, Ni, Sc, Er, Ti, V, Nb, Ta, wherein further the proportion of the at least one alloying element amounts to between 0.5 wt.% and 15 wt.% and the summary proportion in these alloying elements to the respective aluminum base alloy amounts to between 0.5 wt.% and 25 wt.%, and the bonding layer (3) and the bearing metal layer (4) are joined to one another by means of a fusion-metallurgy join forming a bonding zone arranged between the bonding layer (3) and the bearing metal layer (4), wherein grains (9,10) are formed in the bonding zone, wherein a continuous grain boundary gradient is formed in the bonding zone between the bonding layer (3) and the bearing metal layer (4), **characterized in that** the bonding zone has a layer thickness of between 10 µm and 200 µm, in particular between 10 µm and 100 µm.

2. The multi-layer sliding bearing element (14) according to claim 1, **characterized in that** the first aluminum base alloy of the bonding layer (3) and/or the second aluminum base alloy of the bearing metal layer (4) comprise or comprises at least one alloying element, which has a concentration gradient in the bonding zone formed between the bonding layer (3) and the bearing metal layer (4).

3. The multi-layer sliding bearing element (14) according to claim 1 or 2, **characterized in that** the grain size of the grains (9, 10) in the bonding zone formed between the bonding layer (3) and bearing metal layer (4) has an average diameter of at most 100 µm.

4. The multi-layer sliding bearing element (14) according to one of claims 1 to 3, **characterized in that** a proportion of at least 25 % of the grains (9, 10) relative to the totality of grains (9, 10) in the bonding zone have a globular habit at least in the bonding zone formed between the bonding layer (3) and bearing metal layer (4).

5. The multi-layer sliding bearing element (14) according to one of claims 1 to 4, **characterized in that** the first aluminum base alloy of the bonding layer (3) with the exception of the at least one soft phase element has the same qualitative composition as the second aluminum base alloy of the bearing metal layer (4).

6. A method for producing a multi-layer sliding bearing element (14) according to one of claims 1 to 5, comprising the steps:
- producing a two-layer primary material (11) from the first aluminum base alloy or from aluminum forming a first layer of the primary material (11) and from the second aluminum base alloy forming a second layer of the primary material (11) by composite casting;
- joining the two-layer primary material (11) to a substrate forming a support layer (2) of the multi-layer sliding bearing element (14) by roll bonding;
- finishing the roll-bonded composite material to obtain the multi-layer sliding bearing element (14),
**characterized in that**
the composite casting process for producing the primary material (11) is operated in a device (16) having at least three different zones, wherein in a first zone (19) a first strand (22) of aluminum is produced from an aluminum melt or from one of the aluminum base alloys from a first aluminum alloy melt (23), in a second zone (20) the first strand (22) of aluminum melt or the first aluminum base alloy melt (23) is cooled until it has a solidified first surface (24) and in a third zone (21) a second strand (25) of aluminum from an aluminum melt or the other aluminum base alloy from a second aluminum alloy melt (26) is cast onto the solidified first surface (24), with the proviso that if using aluminum, the respective other strand (22 or 25) is produced from the second aluminum base alloy, that further the first strand (22) is cooled in the region of the first surface (24) at a cooling rate selected from a range of 1 °C/s to 15 °C/s and that the first strand (22) is cooled in the region of the first surface (24) to a temperature that is not less than 400 °C.

7. The method according to claim 6, **characterized in that** the first strand (22) is cooled in a cooling line having top cooling circuits assigned to the first surface (24) of the first strand (22) and bottom cooling circuits assigned to a second surface (39) of the first strand (22), wherein the number of the top cooling circuit or top cooling circuits is smaller than the number of bottom cooling circuits.

8. The method according to one of claims 6 to 7, **characterized in that** the first strand (22) is cooled in the region of lateral end faces (40).

9. The method according to one of claims 6 to 8, **characterized in that** having been cast onto the first surface (24) of the first strand (22), the second strand (25) is cooled by a further cooling circuit, wherein the solidification front of the second strand (25) is formed upstream of this further cooling circuit.

10. The method according to one of claims 6 to 9, **characterized in that** the first aluminum base alloy is produced with a substantially globular structure and the second aluminum base alloy is produced with a substantially dendritic structure.

11. The method according to one of claims 6 to 10, **characterized in that** the aluminum base alloys used to produce the first and second strands (22, 25) have melting points which differ by at most 15 % relative to the melting point of the aluminum base alloy having the higher melting point or that, if using aluminum to produce the first or second strand (22 or 25), the aluminum base alloy used for the other strand (25 or 22) has a melting point which is at most 15 % higher than the melting point of aluminum.

12. The method according to one of claims 6 to 11, **characterized in that** the primary material (11) is produced with a layer thickness ratio D of between 2 : 1 and 1: 10, wherein the layer thickness ratio is the ratio of the layer thickness of the first strand (22) to the layer thickness of the second strand (25) after the casting process.

## Revendications

1. Élément de plier lisse multicouche (14) constitué d'un matériau composite comprenant une couche de support (2), une couche de liaison (3) liée à la couche de support (2) et une couche de métal de palier (4) liée à la couche de liaison (3), la couche de liaison (3) étant constituée d'aluminium ou d'un premier alliage à base d'aluminium sans phase molle et la couche de métal de palier (4) étant constituée d'un deuxième alliage à base d'aluminium contenant au moins une phase molle sélectionnée dans un groupe constitué de Sn, Bi, In, Pb ainsi que de mélanges de ceux-ci, avec une part entre 3 % en pois et 49,9 % en poids, plus particulièrement entre 3 % en poids et 40 % en poids, les premier et deuxième alliages d'aluminium contenant au moins un élément qui est sélectionné dans un groupe comprenant ou constitué de Si, Sb, Cu, Mn, Mg, Zn, Co, Zr, Ni, Sc, Er, Ti, V, Nb, Ta, en outre la part de l'au moins un élément d'alliage étant entre 0,5 % en poids et 15 % en poids et la part totale de ces éléments d'alliages dans l'alliage à base d'aluminium respectif étant entre 0,5 % en poids et 25 % en poids, et la couche de liaison (3) étant reliée avec la couche de métal de palier (4) en formant une zone de liaison disposée entre la couche de liaison (3) et la couche de métal de palier (4) par l'intermédiaire d'une liaison par métallurgie de fusion, moyennant quoi, dans la zone de liaison, sont formés des grains (9, 10), moyennant quoi, dans la zone de liaison, est formée une extension continue des limites de grains entre la couche de liaison (3) et la couche de métal de palier (4), **caractérisé en ce que** la zone de liaison présente une épaisseur de couche entre 10 µm et 200 µm, plus particulièrement entre 10 µm et 100 µm.

2. Élément de palier lisse multicouche (14) selon la revendication 1, **caractérisé en ce que** le premier alliage à base d'aluminium de la couche de liaison (3) et/ou le deuxième alliage à base d'aluminium de la couche de métal de palier (4) comprend au moins un élément d'alliage qui présente, dans la zone de liaison entre la couche de liaison (3) et la couche de métal de palier (4), un gradient de concentration.

3. Élément de palier lisse multicouche (14) selon la revendication 1 ou 2, **caractérisé en ce que** la taille des grains (9, 10) dans la zone de liaison formée entre la couche de liaison (3) et la couche de métal de palier (4) présente un diamètre moyen de 100 µm maximum.

4. Élément de palier lisse multicouche (14) selon l'une des revendications 1 à 3, **caractérisé en ce qu'**une part d'au moins 25 % des grains (9, 10), relativement à l'ensemble des grains (9, 10) dans la zone de liaison, présente, au moins dans la zone de liaison formée entre la couche de liaison (3) et la couche de métal de palier (4), un habitus globulaire.

5. Élément de palier lisse multicouche (14) selon l'une des revendications 1 à 4, **caractérisé en ce que** le premier alliage à base d'aluminium de la couche de liaison (3) présente, à l'exception de l'au moins un élément de phase molle, la même composition qualitative que le deuxième alliage à base d'aluminium de la couche de métal de palier (4).

6. Procédé de fabrication d'un élément de palier lisse multicouche (14) selon l'une des revendications 1 à 5, comprenant les étapes suivantes :
- fabrication d'un matériau de base en deux couches (11) à partir du premier alliage à base d'aluminium ou à partir de l'aluminium, qui forme une deuxième couche du matériau de base (11), et du deuxième alliage à base d'aluminium, qui forme une deuxième couche du matériau de base (11), par moulage composite ;
- liaison du matériau de base en deux couches (11) avec un substrat qui forme une couche de support (2) de l'élément de palier lisse multicouche (14), par laminage ;
- finition du matériau composite laminé afin d'obtenir l'élément de palier lisse multicouche (14),
**caractérisé en ce que**
le moulage composite pour la fabrication du matériau de base (11) est effectué dans un dispositif (16), qui comprend au moins trois zones différentes, moyennant quoi, dans une première zone (19), une première bande (22) est réalisée en aluminium à partir d'une fonte d'aluminium ou en un des alliages à base d'aluminium à partir d'une première fonte d'alliage d'aluminium (23), dans une deuxième zone (20), la première bande (22) constituée de la fonte d'aluminium ou de la première fonte d'alliage d'aluminium (23) est refroidie jusqu'à ce que celle-ci présente une première surface solidifiée (24) et **en ce que**, dans une troisième zone (21) sur la première surface solidifiée (24), une deuxième bande (25) en aluminium à partir d'une fonte d'aluminium ou en un autre alliage d'aluminium à partir d'une fonte d'alliage d'aluminium (26), est coulée, sous réserve que, lors de l'utilisation d'aluminium, l'autre bande (22 ou 25) soit réalisée à partir du deuxième alliage à base d'aluminium, qu'en outre la première bande (22) soit refroidie au niveau de la première surface (24), avec une vitesse de refroidissement qui est sélectionné dans une plage de 1 °C/s à 15 °C/s et que la première bande (22) soit refroidie, au niveau de la première surface (24), à une température qui n'est pas inférieure à 400 °C.

7. Procédé selon la revendication 6, **caractérisé en ce que** le refroidissement de la première bande (22) est effectué dans une section de refroidissement qui comprend des circuits de refroidissement supérieurs, correspondant à la première surface (24) de la première bande (22) et des circuits de refroidissement inférieurs, correspondant à une deuxième surface (39) de la première bande (22), le nombre de circuits de refroidissement supérieurs étant inférieur au nombre de circuit de refroidissement inférieurs.

8. Procédé selon l'une des revendications 6 à 7, **caractérisé en ce que** la première bande (22) est refroidie au niveau de faces frontales latérales (40).

9. Procédé selon l'une des revendications 6 à 8, **caractérisé en ce que** la deuxième bande (25) est refroidie après la coulée sur la première surface (24) de la première bande (22) avec un autre circuit de refroidissement, le front de solidification de la deuxième bande (25) étant formé devant cet autre circuit de refroidissement.

10. Procédé selon l'une des revendications 6 à 9, **caractérisé en ce que** le premier alliage à base d'aluminium est réalisé avec une structure globulaire et le deuxième alliage à base d'aluminium est réalisé avec une structure dendritique.

11. Procédé selon l'une des revendications 6 à 10, **caractérisé en ce que**, pour la fabrication des première et deuxième bandes (22, 25), sont utilisés des alliages à base d'aluminium dont les points de fusion sont différents de 15 % maximum, par rapport au point de fusion de l'alliage à base d'aluminium au point de fusion le plus élevé ou **en ce que**, lors de l'utilisation d'aluminium pour la fabrication de la première ou de la deuxième bande (22 ou 25), l'alliage à base d'aluminium utilisé pour l'autre bande (25 ou 22) présente un point de fusion qui est supérieur de 15 % maximum au point de fusion de l'aluminium.

12. Procédé selon l'une des revendications 6 à 11, **caractérisé en ce que** le matériau de base (11) est fabriqué avec un rapport d'épaisseur de couche D entre 2:1 et 1:10, le rapport d'épaisseur de couche étant le rapport entre l'épaisseur de couche de la première bande (22) et l'épaisseur de couche de la deuxième bande (25) après le processus de coulée.
